# EUROPEAN PATENT SPECIFICATION

(11) **EP 4 490 866 B1**
(45) Date of publication and mention of the grant of the patent: **28.01.2026**
(21) Application number: 23715639.3
(22) Date of filing: 10.03.2023
(51) Int. Cl.: H04L 1/00

(54) **EHT LINK ADAPTATION IN WLAN**
EHT-VERBINDUNGSANPASSUNG IN EINEM WLAN
ADAPTATION DE LIAISON EHT DANS UN WLAN

(30) Priority: 10.03.2022 US 202263318650 P; 17.03.2022 US 202263320917 P; 13.10.2022 US 202263415786 P
(43) Date of publication of application: 15.01.2025
(60) Divisional application: 25222212.0
(73) Proprietor: InterDigital Patent Holdings, Inc., Wilmington, DE 19809 (US)
(72) Inventor: LIN, Zinan, New York, New York 10120 (US); LOU, Hanqing, New York, New York 10120 (US); WANG, Xiaofei, New York, New York 10120 (US); YANG, Rui, New York, New York 10120 (US)
(74) Representative: AWA Sweden AB
(86) International application number: PCT/US2023/014986
(87) International publication number: WO 2023/172738

(56) References cited:
- "9. Frame formats 9.2 MAC frame formats 9.2.4 Frame fields 9.2.4.1 Frame Control field 9.2.4.1.3 Type and Subtype fields", vol. 802.11be drafts, no. D1.4, 27 January 2022 (2022-01-27), pages 1 - 138, XP068187966, Retrieved from the Internet <URL:https://grouper.ieee.org/groups/802/11/private/Draft_Standards/11be/Draft%20P802.11be_D1.4%20-%20Figure%20Sources.zip Draft P802.11be_D1.4 - Word.zip TGbe_Cl_09.doc> [retrieved on 20220127]
- JASON YUCHEN GUO (HUAWEI TECHNOLOGIES CO LTD): "CR-for-EHT-UL-MU-Operation", vol. 802.11 EHT; 802.11be, 16 February 2022 (2022-02-16), pages 1 - 15, XP068189308, Retrieved from the Internet <URL:https://mentor.ieee.org/802.11/dcn/22/11-22-0202-00-00be-cr-for-eht-ul-mu-operation.docx> [retrieved on 20220216]
- BO GONG (HUAWEI): "CR on CID 10116", vol. 802.11 EHT; 802.11be, 10 August 2022 (2022-08-10), pages 1 - 13, XP068193265, Retrieved from the Internet <URL:https://mentor.ieee.org/802.11/dcn/22/11-22-1317-00-00be-cr-on-cid-10116.docx> [retrieved on 20220810]

## Description

### CROSS-REFERENCE TO RELATED APPLICATIONS

This application claims the benefit of U.S. Provisional Application No. 63/307,141, filed February 6, 2022, U.S. Provisional Application No. 63/318,650, filed March 10, 2022, Provisional Application No. 63/320,917 filed March 17, 2022, and Provisional Application No. 63/415,786 filed October 13, 2022.

### BACKGROUND

The IEEE 802.11 Extremely High Throughput (EHT) (or IEEE 802.11be) is formed to explore the possibility to further increase peak throughput and improve efficiency of the IEEE 802.11 networks. A list of features to achieve the target increased peak throughput and improved efficiency may include, but are not limited to, Multi-AP, Multi-Band/multi-link, 320 MHz bandwidth, 16 Spatial Streams, Hybrid Automatic Repeat Request (HARQ), AP Coordination, and new designs for 6 GHz channel access. Link adaptation has been proven to be an effective method to improve the overall system throughput without causing extra overhead. However, the current 802.11be (EHT) does not include any mechanism for EHT link adaptation, for example, using A-Control field.

The IEEE draft document XP068187966, IEEE 802.11be/D1.4 draft, published on January 27, 2022, relates to frame formats for EHT control in the IEEE 802.11be standard.

The IEEE 802.11be contribution document XP068189308 "CR-for-EHT-UL-MU-Operation", published on February 16, 2022 relates to the triggering of EHT TB PPDU by STA for another STA.

### SUMMARY

Methods and apparatuses are described herein for Extremely High Throughput (EHT) link adaptation (ELA) in a wireless local area network (WLAN). A station (STA) may receive, from another STA, a first physical layer protocol data unit (PPDU) including a first aggregated-control (A-control) field that comprises a High Efficiency (HE)/Extremely High Throughput (EHT) subfield and a first primary secondary (PS)160 subfield. The HT/EHT subfield may indicate whether a second PPDU that will be transmitted by the STA is based on HE-related parameters or EHT-related parameters. The first PS160 subfield may indicate a primary 160 MHz channel or a secondary 160 MHz channel that the STA will measure. The STA may transmit, to the another STA, based on the HE/EHT subfield, the second PPDU including a second A-control field that comprises a second PS160 subfield, an EHT-modulation and coding scheme (MCS) subfield, and a number of spatial streams (NSS) subfield. The second PS160 subfield may indicates a 160 MHz channel determined based on the indication of the first PS160 subfield. An index in the EHT-MCS subfield and a value in the NSS subfield may be determined based on measurement of the determined 160 MHz channel.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 is a diagram illustrating an example Medium Access Control (MAC) frame format;
FIG. 3 is a diagram illustrating an example Aggregated Control (A-Control) subfield format of the High Efficiency (HE) variant High Throughput (HT) Control field format;
FIG. 4 is a diagram illustrating an example Control subfield format;
FIG. 5 is a diagram illustrating an example Control information subfield format in a High Efficiency (HE) link adaptation (HLA) Control subfield;
FIG 6. is a diagram illustrating an example MCS request (MRQ) sequence identifier (MSI)/Partial PPDU Parameters subfield format if the Unsolicited MCS Feedback (MFB) subfield is 1;
FIG 7. is a diagram illustrating an example HE MAC Capabilities Information field format;
FIG. 8 is a diagram illustrating an example Trigger frame format in 802.11ax;
FIG. 9 is a diagram illustrating an example Common Info field in a Trigger frame;
FIG. 10 is a diagram illustrating an example User Info field in a Trigger frame;
FIG. 11 is a diagram illustrating an example Block Ack (BA) Control field format;
FIG. 12 is a diagram illustrating an example BA Information field format (Compressed BlockAck);
FIG. 13 is a diagram illustrating an example Block Ack Starting Sequence control subfield format;
FIG. 14 is a diagram illustrating an example BA Information field format (Multi_STA BlockAck);
FIG. 15 is a diagram illustrating an example Association Identifier (AID) Traffic Identifier (TID) Info subfield format;
FIG. 16 is a diagram illustrating an example BA Information field format (Multi_TID BlockAck);
FIG. 17 is a diagram illustrating an example per TID Info subfield format;
FIG. 18 is a diagram illustrating an example Control Information subfield format in an Extremely High Throughput (EHT) link adaptation (ELA) Control subfield;
FIG. 19 is a diagram illustrating an example MSI/Partial PPDU Parameters subfield format if the Unsolicited MFB subfield is 1;
FIG. 20 is a diagram illustrating an example Control Information subfield format in an ELA Control subfield (without bandwidth (BW));
FIG. 21 is a diagram illustrating an example Enhanced EHT MAC Capabilities Information field format;
FIG. 22 is a diagram illustrating an example HLA control field EHT variant;
FIG. 23A is a diagram illustrating an example solicited MCS feedback (MFB) operation procedure;
FIG. 23B is a diagram illustrating an example unsolicited MFB operation procedure;
FIG. 24A is a diagram illustrating a solicited MCS feedback (MFB) operation procedure according to the claimed embodiment;
FIG. 24B is a diagram illustrating another example unsolicited MFB operation procedure; and
FIG. 25 is a diagram illustrating an example link adaptation enhanced BA Control field.

### DETAILED DESCRIPTION

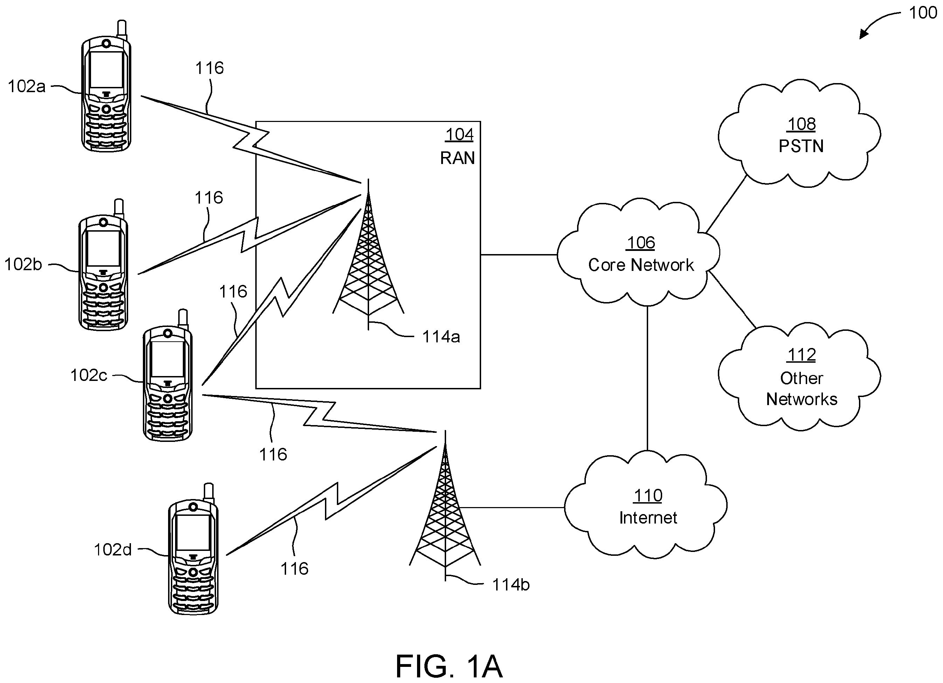

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using NR.

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

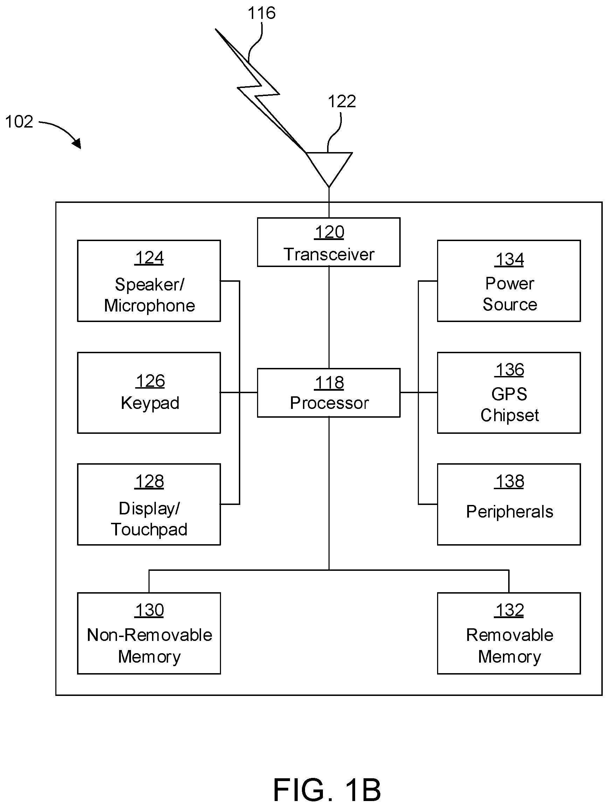

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Liion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscope, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

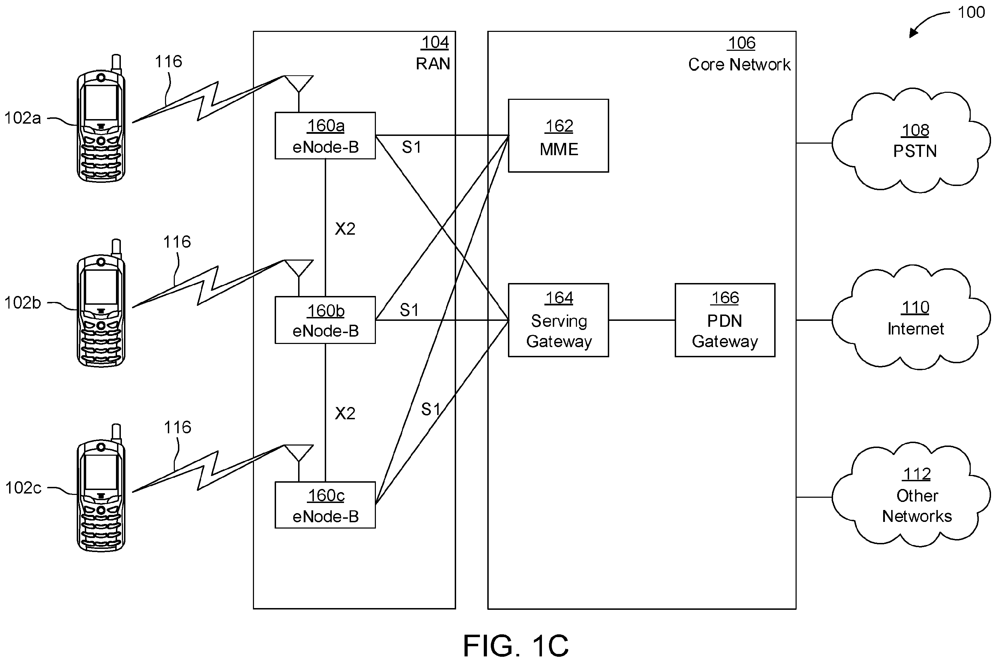

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

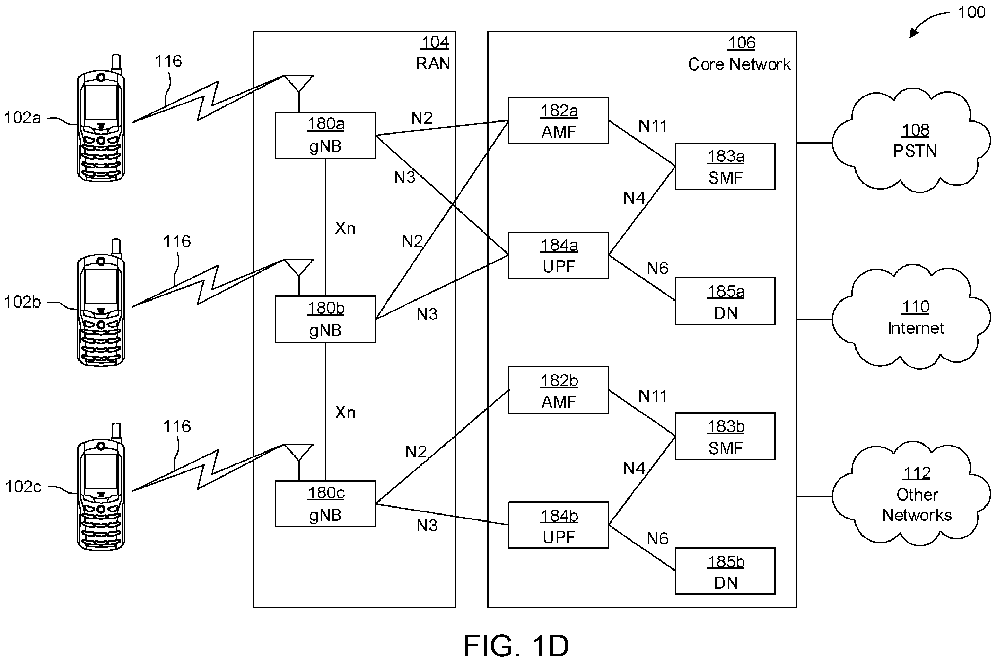

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a,184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

A WLAN in Infrastructure Basic Service Set (BSS) mode has an Access Point (AP) for the BSS and one or more stations (STAs) associated with the AP. The AP typically has access or interface to a Distribution System (DS) or another type of wired/wireless network that carries traffic in and out of the BSS. Traffic to STAs that originates from outside the BSS arrives through the AP and is delivered to the STAs. Traffic originating from STAs to destinations outside the BSS is sent to the AP to be delivered to the respective destinations. Traffic between STAs within the BSS may also be sent through the AP where the source STA sends traffic to the AP and the AP delivers the traffic to the destination STA.

Using the 802.11ac infrastructure mode of operation, the AP may transmit a beacon on a fixed channel, such as a primary channel. This channel may be 20 MHz wide, and is the operating channel of the BSS. This channel is also used by the STAs to establish a connection with the AP. The fundamental channel access mechanism in an 802.11 system is Carrier Sense Multiple Access with Collision Avoidance (CSMA/CA). In this mode of operation, every STA, including the AP, may sense the primary channel. If the channel is detected to be busy, the STA may back off. Hence one STA (e.g., only one STA) may transmit at any given time in a given BSS.

High Throughput (HT) STAs may also use a 40 MHz wide channel for communication. This may be achieved by combining the primary 20 MHz channel, with an adjacent 20 MHz channel to form a 40 MHz wide contiguous channel.

In 802.11ac, Very High Throughput (VHT) STAs may support 20 MHz, 40 MHz, 80 MHz, and 160 MHz wide channels. The 40 MHz, and 80 MHz, channels are formed by combining contiguous 20 MHz channels similar to 802.11n described above. A160 MHz channel may be formed either by combining 8 contiguous 20 MHz channels, or by combining two non-contiguous 80 MHz channels. This may also be referred to as an 80+80 configuration. For the 80+80 configuration, the data, after channel encoding, is passed through a segment parser that divides it into two streams. IFFT, and time domain, processing are done on each stream separately. The streams are then mapped on to the two channels, and the data is transmitted. At the receiver, this mechanism is reversed, and the combined data is sent to the MAC.

To improve spectral efficiency 802.11ac has introduced the concept for downlink Multi-User MIMO (MU-MIMO) transmission to multiple STAs in the same symbol's time frame, for example, during a downlink OFDM symbol. The potential for the use of downlink MU-MIMO is also currently considered for 802.11ah. It is important to note that since downlink MU-MIMO, as it is used in 802.11ac, uses the same symbol timing to multiple STAs, interference of the waveform transmissions to multiple STAs is not an issue. However, all STAs involved in the MU-MIMO transmission with the AP may need to use the same channel or band. This may limit the operating bandwidth to the smallest channel bandwidth that is supported by the STAs which are included in the MU-MIMO transmission with the AP.

A STA may properly construct a subset of the frames for transmission and to decode a (potentially different) subset of the frames upon validation following reception. The particular subset of these frames that a STA constructs and decodes may be determined by the functions supported by that particular STA. A STA may validate every received frame using the frame check sequence (FCS) and to interpret certain fields from the MAC headers of all frames.

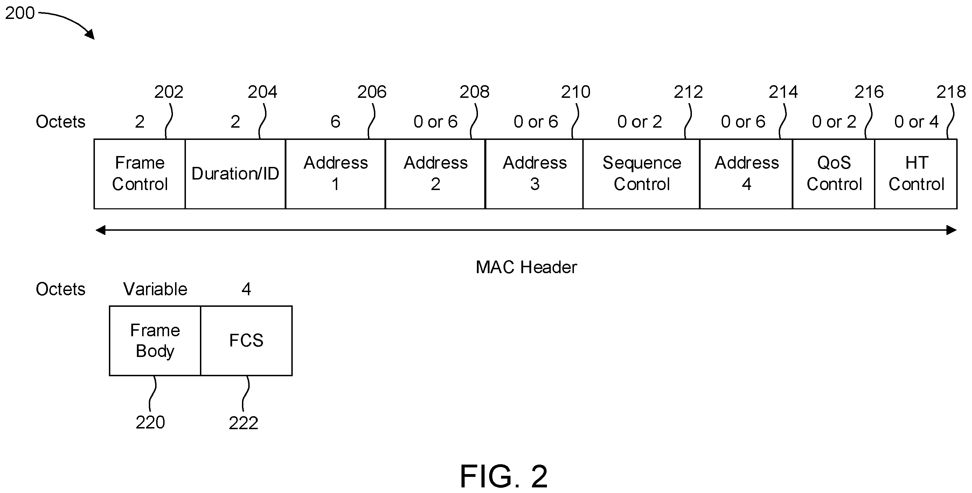

FIG. 2 is a diagram illustrating an example Medium Access Control (MAC) frame format 200, which may be used in combination with any of other embodiments described herein. The MAC frame format 200 may comprise a set of fields that occur in a fixed order in all frames. Specifically, as illustrated in FIG. 2, the MAC frame 200 may include a MAC header comprising a Frame Control field 202, a Duration/ID field 204, an Address 1 field 206, an Address 2 field 208, an Address 3 field 210, a Sequence Control field 212, an Address 4 field 214, a QoS Control field 216, and an High Throughput (HT) Control field 218. The MAC frame 200 may further include a frame body 220 and a frame check sequence (FCS) 222. A STA may transmit frames using the frame formats described in FIG. 2. FIG. 2 describes the general MAC frame format for protocol version 0 (PV0) MPDU as an example.

The HT Control field 218 may be present in a Control Wrapper frame and be present in QoS Data, (802.11ax) QoS Null, and management frames as determined by the +HTC subfield of the Frame Control field 202.

The HT Control field 218, for example, transmitted by a non-China Millimeter-Wave Multi-Gigabit (non-CMMG) STA, may include three variants: an HT variant, a VHT variant, and an HE variant. The variant formats are differentiated by the values of B0 and B1 as described in Table 1.

**Table 1: HT Control field format**

| Variant | B0 | B1 | B2-B9 | B30 | B31 |
|---|---|---|---|---|---|
| HT | 0 | HT Control Middle | | AC Constraint | RDG/More PPDU |
| VHT | 1 | 0 | VHT Control Middle | AC Constraint | RDG/More PPDU |
| HE | 1 | 1 | A-Control | | |

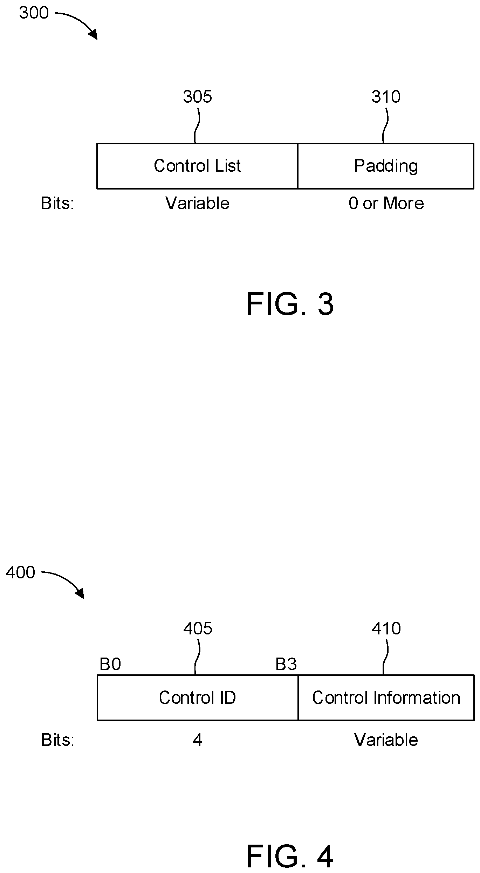

FIG. 3 is a diagram illustrating an example Aggregated Control (A-Control) subfield format 300 of the High Efficiency (HE) variant HT Control field format, which may be used in combination with any of other embodiments described herein. As illustrated in FIG. 3, the A-Control subfield 300 may include a Control List subfield 305 and padding 310. The A-Control subfield 300 may be 30 bits in length. The Control List subfield 305 may include one or more Control subfields.

FIG. 4 is a diagram illustrating an example Control subfield format 400, which may be used in combination with any of other embodiments described herein. The format of each Control subfield 400 is shown in FIG. 4. For example, the Control subfield 400 may includes a Control ID subfield 405 and a Control Information subfield 410 as illustrated in FIG. 4.

The Control ID subfield 405 may indicate the type of information carried in the Control Information subfield 410. The length of the Control Information subfield 410 may be fixed for each value of the Control ID subfield 405 that is not reserved. The values of the Control ID subfield 405 and the associated length of the Control Information subfield 410 are defined in Table 2.

**Table 2: Control ID subfield values**

| Control ID Value | Meaning | Length of the Control Information subfield (bits) | Content of the control Information subfield |
|---|---|---|---|
| 0 | Triggered response scheduling (TRS) | 26 | TRS Control |
| 1 | Operating mod (OM) | 12 | OM Control |
| 2 | HE link adaptation (HLA) | 26 | HLA Control |
| 3 | Buffer status report (BSR) | 26 | BSR Control |
| 4 | UL power headroom (UPH) | 8 | UPH Control |
| 5 | Bandwidth query report (BQR) | 10 | BQR Control |
| 6 | Command and status (CA) | 8 | CAS Control |
| 7 | EHT operating mode (EHT OM) | 6 | EHT OM Control |
| 8 | Single response scheduling (SRS) | 10 | SRS Control |
| 10 | AP assistance request (AAR) | 20 | AAR Control |
| 9, 11-14 | Reserved | | |
| 15 | One need expansion surely (ONES) | 26 | Set to all 1s |

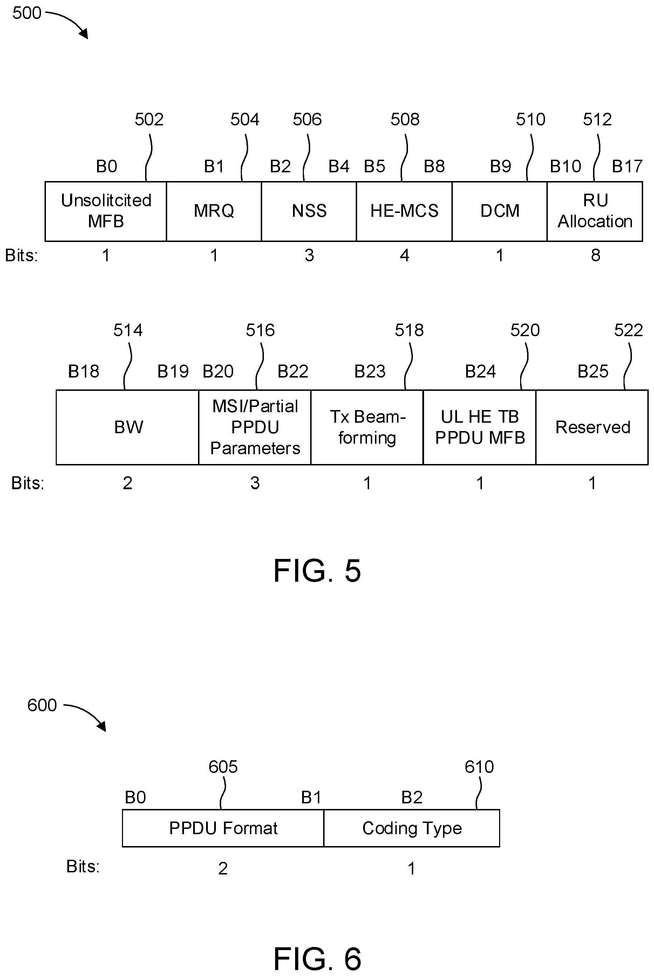

FIG. 5 is a diagram illustrating an example Control Information subfield format 500 in a High Efficiency (HE) link adaptation (HLA) Control subfield, which may be used in combination with any of other embodiments described herein. The Control Information subfield 500 in an HLA Control subfield may include information related to the HE link adaptation (HLA) or HLA procedure. The format of the Control Information subfield 500 is illustrated in FIG. 5. In an example, the HLA Control subfield 500 may be defined in Table 3.

**Table 3: HLA Control subfield**

| Subfield | Meaning | Definition |
|---|---|---|
| NSS | Recommended number of spatial streams | If the Unsolicited MFB (Modulation and coding scheme FeedBack) subfield is 1 and the UL HE TB PPDU MFB subfield is 0 or if the Unsolicited MFB subfield is 0 and the MRQ (Modulation and coding scheme ReQuest)subfield is 0, the NSS subfield indicates the recommended number of spatial streams to the PPDU sent to the STA, *NSS*, and is set to *NSS* - 1. |
| | | If the Unsolicited MFB subfield is 1 and the UL HE TB PPDU MFB subfield is 1, the NSS subfield indicates the recommended number of spatial streams to the HE TB PPDU sent from the STA, *NSS*, and is set to *NSS -* 1. |
| | | Otherwise, this subfield is reserved. |
| HE_MCS | Recommended HE-MCS | If the Unsolicited MFB subfield is 1 and the UL HE TB PPDU MFB subfield is 0 or if the Unsolicited MFB subfield is 0 and the MRQ subfield is 0, the HE-MCS subfield indicates the recommended HE-MCS of the PPDU sent to the STA, and is set to the HE-MCS index. |
| | | If the Unsolicited MFB subfield is 1 and the UL HE TB PPDU MFB subfield is 1, the HE-MCS subfield indicates the recommended HE-MCS of the HE TB PPDU sent from the STA, and is set to the HE-MCS index. |
| | | Otherwise, this subfield is reserved. |
| DCM | Recommended usage of dual carrier modulation (DCM) | If the Unsolicited MFB subfield is 1 and the UL HE TB PPDU MFB subfield is 0 or if the Unsolicited MFB subfield is 0 and the MRQ subfield is 0, the DCM subfield indicates the recommended usage of DCM. This subfield is set to 1 if DCM is recommended to the PPDU sent to the STA and is set to 0 otherwise. |
| | | If the Unsolicited MFB subfield is 1 and the UL HE TB PPDU MFB subfield is 1, the DCM subfield indicates the recommended usage of DCM. This subfield is set to 1 if DCM is recommended to the |
| | | HE TB PPDU sent from the STA and is set to 0 otherwise. |
| | | Otherwise, this subfield is reserved. |
| RU Allocation | RU of the recommended HE-MCS/RU specified by MFB requester to get feedback | If the Unsolicited MFB subfield is 1 and the UL HE TB PPDU MFB subfield is 0, the RU Allocation subfield indicates the RU for which the recommended HE-MCS applies to the PPDU sent to the STA, as defined in Link adaptation using the HLA Control subfield. |
| | | If the Unsolicited MFB subfield is 0 and the MRQ subfield is 1, the RU subfield indicates the RU requested by the MFB requester to get feedback. The RU Allocation subfield is interpreted with the BW subfield to specify the RU. The RU index encoding is as defined in B7-B1 of the RU Allocation subfield. |
| | | If the Unsolicited MFB subfield is 1 and the UL HE TB PPDU MFB subfield is 1, the RU Allocation subfield indicates the RU for which the recommended HE-MCS applies to the HE TB PPDU sent from the STA, as defined in Link adaptation using the HLA Control subfield and that the actual allocation of the RU can be ignored by the recipient. |
| | | Otherwise, this subfield is reserved. |
| BW | Bandwidth of the recommended HE-MCS/Bandwidth specified by MFB requester to get feedback | If the Unsolicited MFB subfield is 1 and the UL HE TB PPDU MFB subfield is 0, the BW subfield indicates the bandwidth for which the recommended HE-MCS applies to the PPDU sent to the STA, as defined in Link adaptation using the HLA Control subfield. |
| | | If the Unsolicited MFB subfield is 1 and the UL HE TB PPDU MFB subfield is 1, the BW subfield indicates the bandwidth for which the recommended HE-MCS applies to the HE TB PPDU sent from the STA, as defined in Link adaptation using the HLA Control subfield. |
| | | If the Unsolicited MFB subfield is 0 and the MRQ subfield is 1, the BW subfield indicates the |
| | | bandwidth requested by the MFB requester to get feedback. |
| | | Set to 0 for 20 MHz |
| | | Set to 1 for 40 MHz |
| | | Set to 2 for 80 MHz |
| MSI/Partial PPDU Parameters | Partial parameters of the measured PPDU/ MRQ sequence identifier | If the Unsolicited MFB subfield is 0 and the MRQ subfield is 1, the MSI/Partial PPDU Parameters subfield includes a sequence number in the range 0 to 6 that identifies the specific HE-MCS feedback request. |
| | | If the Unsolicited MFB subfield is 0 and the MRQ subfield is 0, the MSI/Partial PPDU Parameters subfield includes a sequence number in the range 0 to 6 that responds to the specific solicited HE-MCS feedback request. |
| | | If the Unsolicited MFB subfield is 1, the MSI/Partial PPDU Parameters subfield includes the PPDU Format and Coding Type subfields as shown in FIG. 6 |
| Tx Beamforming | Transmission type of the measured PPDU | If the Unsolicited MFB subfield is 1 and the UL HE TB PPDU MFB subfield is 0, then the Tx Beamforming subfield indicates whether or not the PPDU from which the unsolicited MFB was estimated is beamformed. |
| | | Set to 0 for non-beamformed PPDU |
| | | Set to 1 for beamformed PPDU |
| | | Otherwise, this subfield is reserved. |
| UL HE TB PPDU MFB | UL HE TB PPDU MFB indication | If the Unsolicited MFB subfield is 1, a value of 1 in this subfield indicates that the NSS, HE-MCS, DCM, BW and RU Allocation fields represent the recommended MFB for the HE TB PPDU sent from the STA as defined in Link adaptation using the HLA Control subfield. |
| | | Otherwise, this subfield is reserved. |

FIG. 6 is a diagram illustrating an example MCS request (MRQ) sequence identifier (MSI)/Partial PPDU Parameters subfield format 600 if the Unsolicited MCS Feedback (MFB) subfield is 1 or true, which may be used in combination with any of other embodiments described herein. As illustrated in FGI. 6, the MSI/Partial PPDU Parameters subfield 600 may include a PPDU Format subfield 605 and a Coding Type subfield 610.

The PPDU Format subfield 605 may indicate the format of the PPDU from which the unsolicited MCS Feedback (MFB) was estimated:
Set to 0 for an HE SU PPDU;
Set to 1 for an HE MU PPDU;
Set to 2 for an HE ER SU PPDU; and
Set to 3 for an HE TB PPDU.

The Coding Type subfield 610 may include the coding information of the PPDU from which the unsolicited MFB was estimated:
Set to 0 for Binary Convolutional Codes (BCC); and
Set to 1 for Low-Density Parity-Check (LDPC).

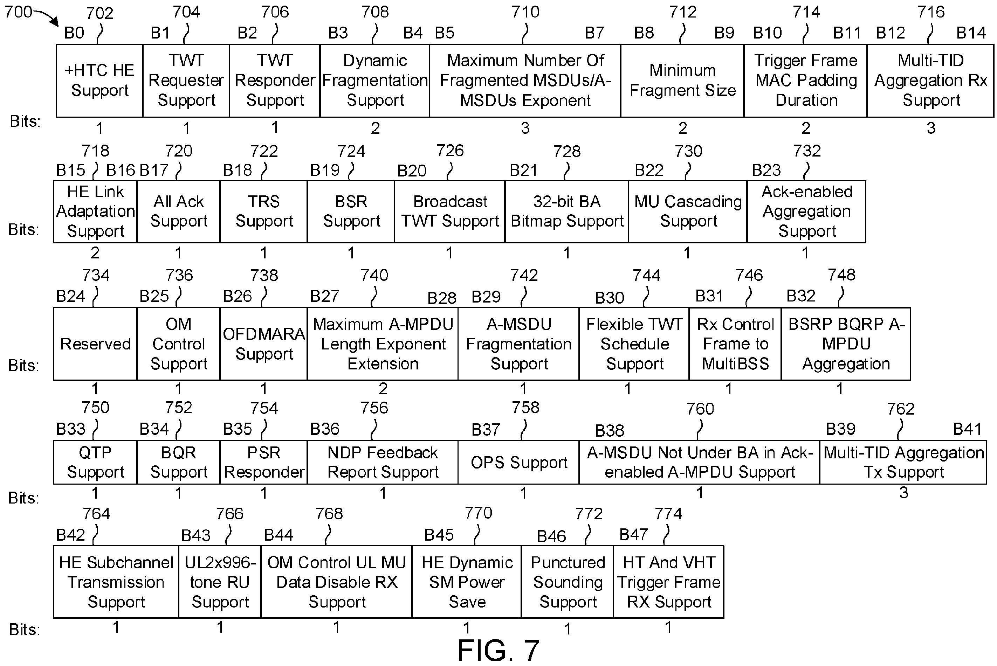

A STA or an HE STA may declare that it is an HE STA by transmitting the HE Capabilities element. FIG 7. is a diagram illustrating an example HE MAC Capabilities Information field format 700, which may be used in combination with any of other embodiments described herein. An HE capabilities element may include, but is not limited to, Element ID, length, Element ID Extension, HE MAC Capabilities Information 700, HE PHY Capabilities Information, Supported HE-MCS And NSS Set, and PHY Packet Extension (PPE) Thresholds (optional) subfields. As illustrated in FIG. 7, the format of the HE MAC Capabilities Information field 700 may include +HTC HE Support 702, TWT Requester Support 704, TWT Responder Support 706, Dynamic Fragmentation Support 708, Maximum Number Of Fragmented MSDUs/A-MSDUs Exponent 710, Minimum Fragment Size 712, Trigger Frame MAC Padding Duration 714, Multi-TID Aggregation Rx Support 716, HE Link Adaptation Support 718, All Ack Support 720, TRS Support 722, BSR Support 724, Broadcast TWT Support 726, 32-txt BA Bitmap Support 728, MU Cascading Support 730, Ack-Enabled Aggregation Support 732, Reserved 734, OM Control Support 736, OFDMA RA Support 738, Maximum A-MPDU Length Exponent Extension 740, A-MSDU Fragmentation Support 742, Flexible TWT Schedule Support 744, Rx Control Frame To MultiBSS 746, BSRP BORP A-MPDU Aggregation 748, QTP Support 750, BQR Support 752, PSR Responder 754, NDP Feedback Report Support 756, OPS Support 758, A-MSDU Not Under BA In Ack-Enabled A-MPDU Support 760, Multi-TID Aggregation Tx Support 762, HE Subchannel Selective Transmission Support 764, UL 2x996-tone RU Support 766, OM Control UL MU Data Disable RX Support 768, HE Dynamic SM Power Save 770, Punctured Sounding Support 772, and HT And VHT Trigger Frame RX Support 774 subfields.

The HE Link Adaptation Support subfield 718 of the HE MAC Capabilities Information field 700 may be given in Table 4.

**Table 4 HE Link Adaptation Support Subfield in HE MAC Capabilities Information field**

| Subfield | Definition | Encoding | |
|---|---|---|---|
| HE Link Adaptation Support (B15-B16) | Indicates support for link adaptation using the HLA Control subfield. | If the +HTC-HE Support subfield is 1: | |
| | | | Set to 0 (No Feedback) if the STA does not provide HE MFB. Set to 2 (Unsolicited) if the STA can receive and provide only unsolicited HE MFB. |
| | | | Set to 3 (Solicited and unsolicited) if the STA is capable of receiving and providing HE MFB in response to HE MRQ and if the STA can receive and provide unsolicited HE MFB. |
| | | | The value 1 is reserved. |
| | | | HE MFB and HE MRQ are MFB and MRQ using HLA Control subfield, respectively. |
| | | Reserved if the +HTC-HE Support subfield is 0. | |

Link adaptation using the HLA Control subfield is described herein. The appearance of more than one instance of an HLA Control subfield with the MCS request (MRQ) field equal to 1 within a single PPDU may be interpreted by the receiver as a single request for link adaptation feedback.

The MFB requester, for example, a transmitter, may specify the RU index and BW requesting the link adaptation feedback. Upon receipt of an HLA Control subfield with the MRQ subfield equal to 1, an MFB responder, for example, a receiver, may compute the HE-MCS, Nss, and DCM of the RU and BW specified in the MRQ. These estimates may be based on the same RU of the PPDU carrying the MRQ. The PPDU carrying MRQ may include the RU requested for MFB. The MFB responder may label the result of this computation with the MRQ sequence identifier (MSI) value from the HLA Control subfield in the received frame carrying the MRQ. The MFB responder may include the received MSI value in the MSI field of the corresponding response frame. In the case of a delayed response, this allows the MFB requester to associate the MFB with the soliciting MRQ.

A STA may provide its feedback for the link adaption to another STA without solicitation (i.e., MCS request). For example, unsolicited HE-MCS, Nss, DCM, BW, and RU estimates reported in an HLA Control subfield sent by a STA may be computed based on the most recent PPDU received by the STA that matches the description indicated by the PPDU format, Tx Beamforming, and Coding Type subfields in the same HLA Control subfield.

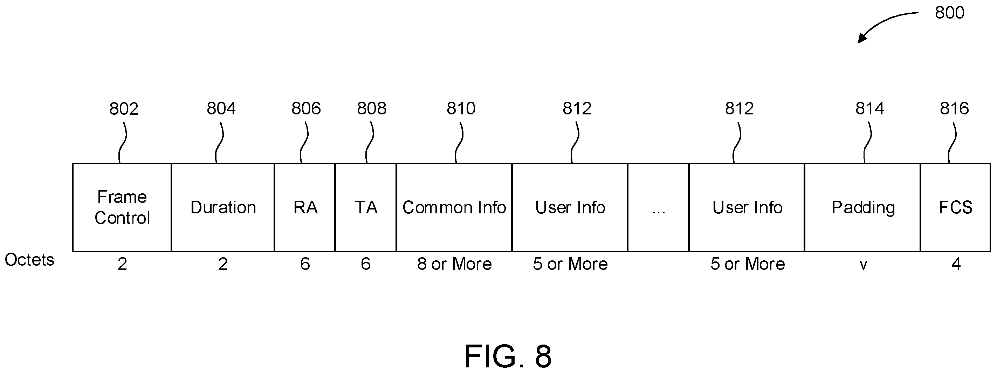

FIG. 8 is a diagram illustrating an example Trigger frame format 800, which may be used in combination with any of other embodiments described herein. A Trigger frame was introduced firstly in 802.11ax. A Trigger frame may be used to allocate resources and trigger single or multi-user access. As illustrated in FIG. 8, a Trigger frame may include, but is not limited to, a Frame Control field 802, a Duration field 804, an RA field 806, a TA field 808, a Common Info field 810, a User Info field 812, padding 814 and a Frame Control Sequence (FCS) field 816.

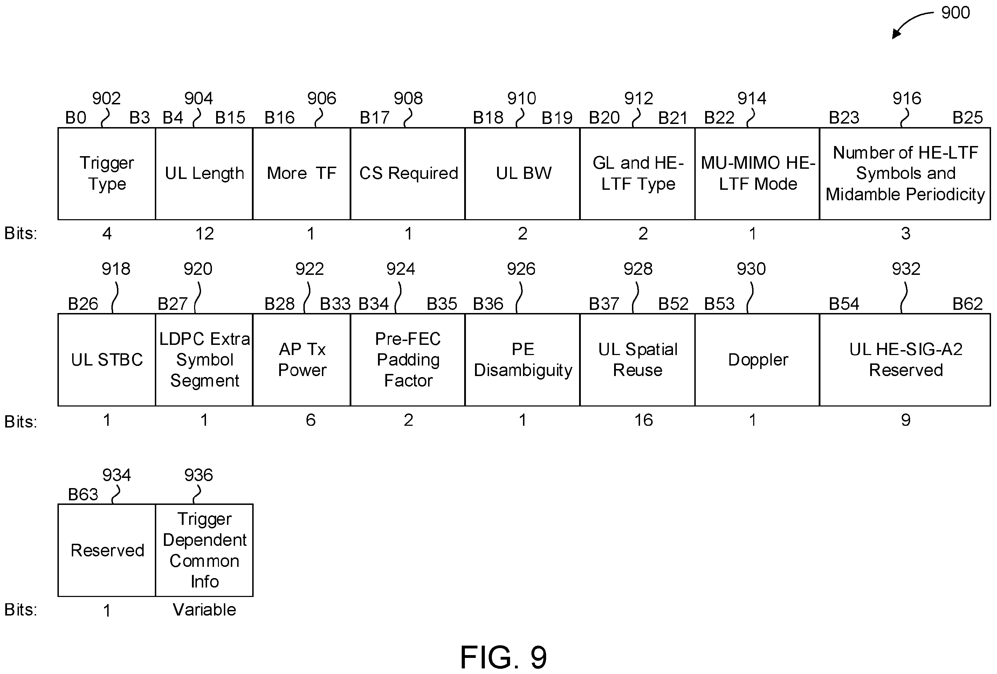

FIG. 9 is a diagram illustrating an example Common Info field 900 in a Trigger frame, which may be used in combination with any of other embodiments described herein. As illustrated in FIG. 9, the Common Info field 900 may include, but is not limited to, a Trigger Type 302, UL Length 904, More TF 906, CS Required 908, UL BW 910, GI And HE-LTF Type 912, MU-MIMO HE-LTF Mode 914, Number Of HE-LTF Symbols And Midamble Periodicity 916, UL STBC 918, LDPC Extra Symbol Segment 920, AP Tx Power 922, Pre-FEC Padding Factor 924, PE Disambiguity 926, UL Spatial Reuse 928, Doppler 930, UL HE SIG-A2 Reserved 932, Reserved 934, and Trigger Dependent Common Info 936 subfields.

The Trigger Type subfield 302 in the Common Info field 900 may include possible values as shown in Table 5.

**Table 5 Trigger Type**

| Trigger Type Subfield value | Trigger frame variant |
|---|---|
| 0 | Basic |
| 1 | BF Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8-15 | Reserved |

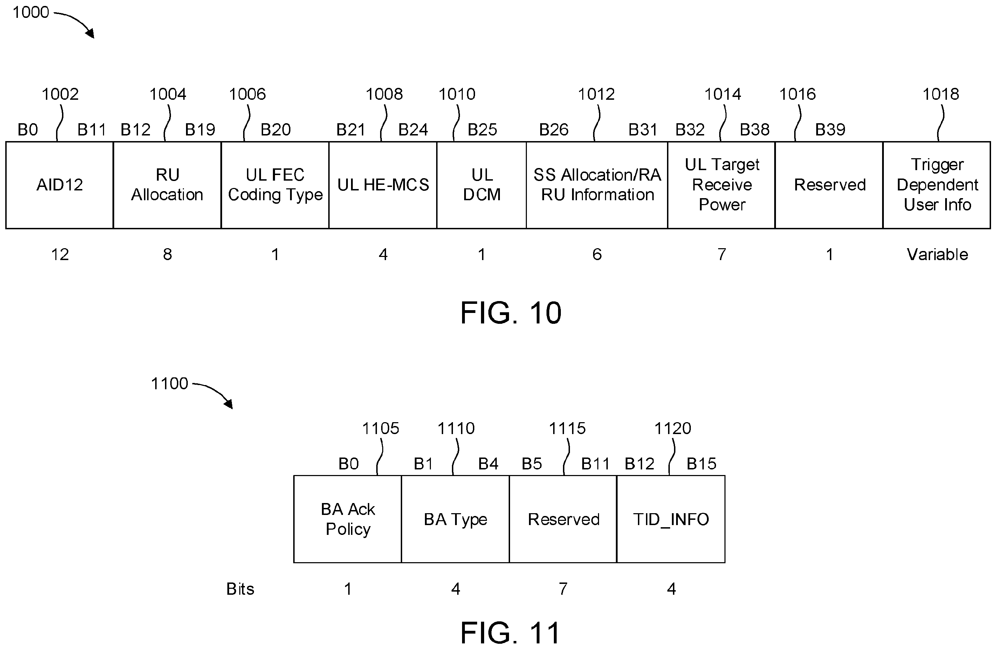

FIG. 10 is a diagram illustrating an example User Info field 1000 in a Trigger frame, which may be used in combination with any of other embodiments described herein. The User Info field 1000 for all trigger types except Null Feedback Report Poll (NFRP) trigger may be described in FIG. 10. As illustrated in FIG. 10, the User Info field 1000 may include, but is not limited to, an AID 12 subfield 1002, a RU Allocation subfield 1004, a UL FEC Coding Type subfield 1006, a UL DCM subfield 1010, an SS Allocation/RA-RU Information subfield 1012, a UL Target Receive Power subfield 1014, a Reserved subfield 1016, and a Trigger Dependent User Info subfield 1018.

FIG. 11 is a diagram illustrating an example Block Ack (BA) Control field format 1100, which may be used in combination with any of other embodiments described herein. As illustrated in FIG. 11, the BA Control field 1100 may include, but is not limited to, a BA Ack policy subfield 1105, a BA Type subfield 1110, a Reserved subfield 1115, and a TID_INFO subfield 1120.

The BA Type subfield 1110 in the BA Control field 1100 may indicate the BlockAck frame variant as defined in Table 6.

**Table 6 BlockAck frame variant encoding**

| BA Type | BlockAck frame variant |
|---|---|
| 0 | Reserved |
| 1 | Extended Compressed |
| 2 | Compressed |
| 3 | Multi-TID |
| 4-5 | Reserved |
| 6 | GCR |
| 7-9 | Reserved |
| 10 | GLK-GCR |
| 11 | Multi-STA |
| 12-15 | Reserved |

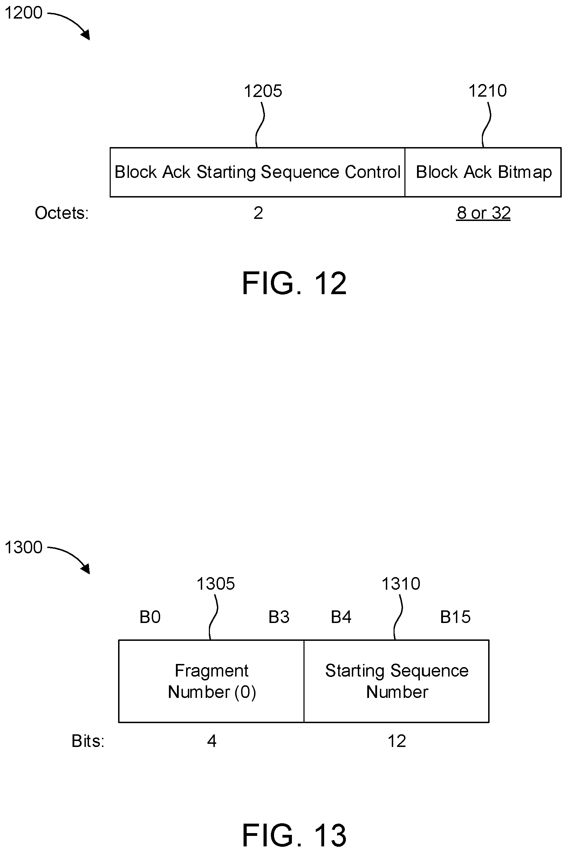

FIG. 12 is a diagram illustrating an example BA Information field format (of the Compressed BlockAck frame) 1200, which may be used in combination with any of other embodiments described herein. As illustrated in FIG. 12, the BA Information field 1200 may include, but is not limited to, a Block Ack Starting Sequence Control subfield 1205 and a Block Ack Bitmap subfield 1210.

FIG. 13 is a diagram illustrating an example Block Ack Starting Sequence control subfield format 1300, which may be used in combination with any of other embodiments described herein. As illustrated in FIG. 13, the Block Ack Starting Sequence control subfield 1300 may include, but is not limited to, a Fragment Number (0) subfield 1305 and a Starting Sequence Number 1310.

The TID_INFO subfield of the BA Control field of the Compressed BlockAck frame may include the TID for which this BlockAck frame is sent. The BA Information field 1200 of the Compressed BlockAck frame is shown in FIG. 12. The Block Ack Starting Sequence Control subfield 1300 is shown in FIG. 13. The Starting Sequence Number subfield 1310 of the Block Ack Starting Sequence Control subfield 1300 may include the sequence number of the first MSDU or A-MSDU for which this BlockAck frame is sent.

Multi-STA BlockAck variants are descried herein. The Multi-STA BlockAck frame may be supported if either UL MU or multi-TID A-MPDU operation is supported and acknowledges MPDUs carried in an HE TB PPDU or multi-STA multi-TID, multi-STA single-TID, or single-STA multi-TID A-MPDUs.

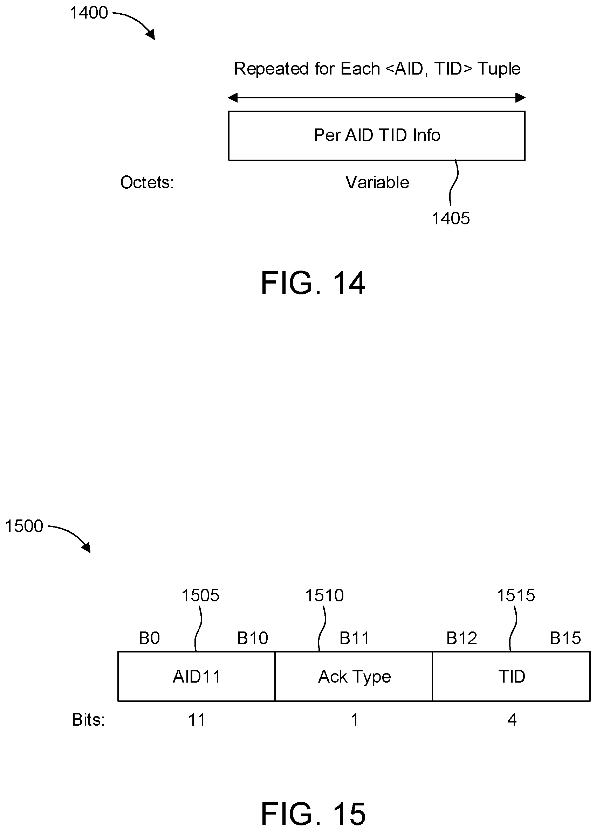

FIG. 14 is a diagram illustrating an example BA Information field format (Multi_STA BlockAck) 1400 , which may be used in combination with any of other embodiments described herein. As illustrated in FIG. 14, the BA Information field 1400 may include, but is limited to, a Per AID TIM Info subfield 1405. The BA Information field 1400 of the Multi-STA BlockAck frame may comprise one or more Per AID TID Info subfields 1405 as illustrated in FIG. 14.

FIG. 15 is a diagram illustrating an example Association Identifier (AID) Traffic Identifier (TID) Info subfield format 1500, which may be used in combination with any of other embodiments described herein. As illustrated in FIG. 15, the AID TID Info subfield 1500 may include, but are is limited to, an AID 11 subfield 1505, an Ack Type subfield 1510, and a TID subfield 1515.

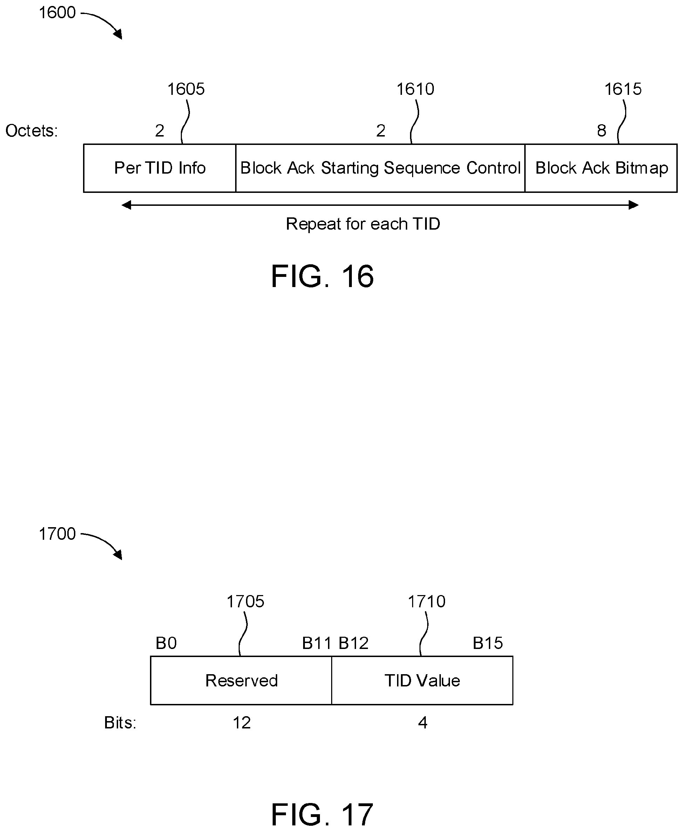

FIG. 16 is a diagram illustrating an example BA Information field format (Multi_TID BlockAck) 1600, which may be used in combination with any of other embodiments described herein. As illustrated in FIG. 16, the BA information field 1600 may include, but is not limited to, a Per TID Info subfield 1605, a Block Ack Starting Sequence Control subfield 1610, and a Block Ack Bitmap subfield 1615. FIG. 17 is a diagram illustrating an example Per TID Info subfield format 1700, which may be used in combination with any of other embodiments described herein. As illustrated in FIG. 17, the Per TID Info subfield 1700 may include, but is not limited to, a Reserved subfield 1705 and a TID value subfield 1710. The TID_INFO subfield 1700 of the BA Control field 1600 of the Multi-TID BlockAck frame may include the number of TIDs, minus one, for which information is reported in the BA Information field. The BA Information field of the Multi-TID BlockAck frame may comprise one or more instances of the Per TID Info 1605, Block Ack Starting Sequence Control 1610, and the Block Ack Bitmap 1615 subfields, as shown in FIG. 16. The Per TID Info subfield 1700 is shown in FIG. 17, and the Block Ack Starting Sequence Control subfield is shown in FIG. 13.

The IEEE 802.11 Extremely High Throughput (EHT) is considered as the next major revision to IEEE 802.11 standards following 802.11ax. EHT is formed to explore the possibility to further increase peak throughput and improve efficiency of the IEEE 802.11 networks. The primary use cases and applications addressed may include, but are not limited to, high throughput and low latency applications such as: Video-over-WLAN; Augmented Reality (AR); and Virtual Reality (VR).

A list of features to achieve the target of increased peak throughput and improved efficiency may include, but are is limited to: Multi-AP; Multi-Band/multi-link; 320 MHz bandwidth; 16 Spatial Streams; HARQ; AP Coordination; and New designs for 6 GHz channel access.

Link Adaptation is a mechanism of a transmitter and receiver communicating to establish optimal parameters, such as modulation and coding scheme (MCS), given the channel condition or the radio environment. The MCS may include variables such as modulation, and the data rate on each spatial stream. The transmitter may need to obtain the feedback from the receiver to determine the optimum MCS based on channel conditions and then continuously adjust the selection of MCS as conditions change due to interference, motion, fading, and other events. Link adaptation has been proven to be an effective method to improve the overall system throughput without causing extra overhead. However, in the current 802.11be (EHT), there is no definition for EHT link adaptation, for example, using A-Control field. Thanks to many differences between EHT and HE features, for example, the different MCS combinations, operating BW, different Nss parameter, different PPDU types, etc., it is hard to reuse the existing HLA Control subfield to enable link adaptation for EHT devices. Therefore, there is a need to define EHT link adaptation, for example, via A-Control field.

In the 802.11ax, it is indicated that unsolicited HE-MCS, Nss, DCM, BW, and RU estimates reported in an HLA Control subfield sent by a STA are computed based on the most recent PPDU received by the STA that matches the description indicated by the PPDU format, Tx Beamforming, and Coding Type subfields in the same HLA Control subfield. When the PPDU format is 1, it is indicated it is HE MU PPDU. Both OFDMA and MU-MIMO transmissions use MU-PPDU format. However, the recommended MCS, Nss, DCM may be significantly different between these two types of transmissions. The similar problem may exist in EHT devices. Therefore, it needs an enhanced method to differentiate the recommended HE-MCS, Nss, DCM etc. for MU-MIMO or OFDMA transmission for HE devices.

To optimize the MU-MIMO link adaptation, it may require different MCS and Nss for different paired STAs (e.g., two or more STAs). In addition, if the recommended MCS and/or Nss are for different paired STAs, the overhead will be dramatically increasing. In the current 802.11ax/802.11be, there is no such a method to indicate which paired STAs in MU-MIMO transmission the recommended MCS and/or Nss is for. Therefore, there is a need to have an enhanced signaling to indicate the recommended MCS and/or Nss for the different paired STAs.

The current ACK or BlockACK only simply feedbacks one bit to indicate if the packet is correctly received or not. There is no other information to indicate how bad or how good the received PPDU is being decoded. Therefore, there is a need to enhance the current Block ACK mechanism such that the transmitter may have better knowledge about how the received PPDU is received, for example, higher than the required SNR, or lower than the required SNR, etc.

The TRS Control field in A-Control subfield of HE variant HT Control field may be used for triggered response scheduling. The TRS Control field may carry an 8-bit RU Allocation subfield which is used to identify a RU assigned to a STA in 802.11ax. In 802.11be, since wider bandwidth (e.g., 320 MHz) is supported and 8-bit RU Allocation subfield is not enough to uniquely define an RU. Modification is needed if the TRS Control field is reused in 802.11be.

Embodiments for EHT Link Adaptation via A-Control Field are described herein. The embodiments described herein may address how to enable EHT link adaptation via A-Control. Although the embodiments described herein are based on EHT devices (e.g., AP and/or STA), it can be extended to devices which belong to the next generation of WiFi.

Embodiments for EHT Link Adaptation Control field are described herein. In one embodiment, a type of control field to support EHT link adaptation may be included in the control information as indicated in Table 7.

**Table 7 Exemplary control ID subfield values with new control ID**

| Control ID value | Meaning | Length of the Control Information subfield (bits) |
|---|---|---|
| 0 | Triggered response scheduling (TRS) | 26 |
| 1 | Operation mode (OM) | 12 |
| 2 | HE link adaptation (HLA) | 26 |
| ... | ... | ... |
| 9 | EHT link adaptation (ELA) | 26 |

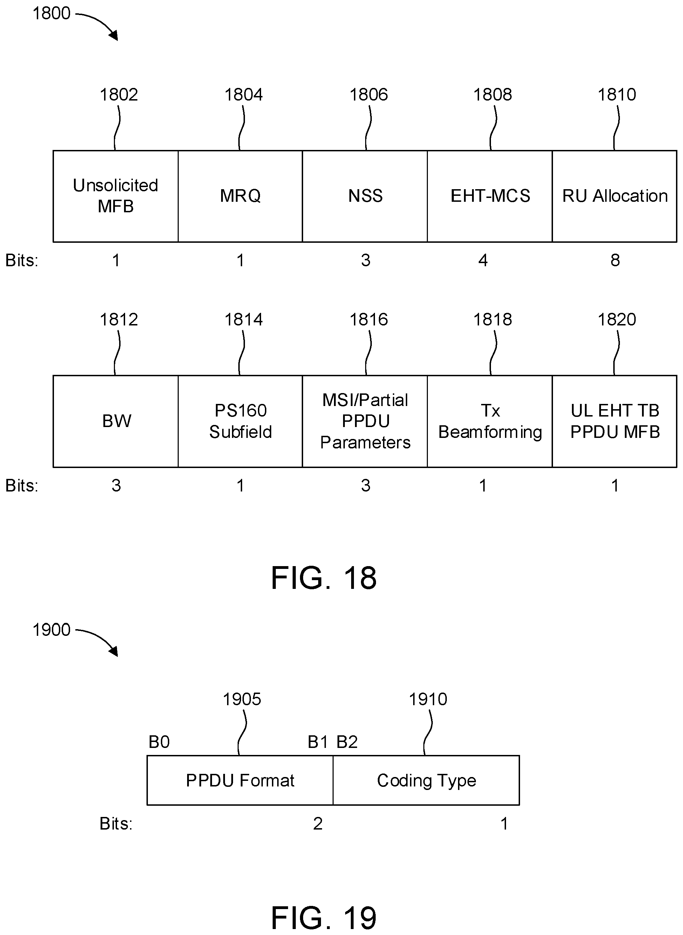

FIG. 18 is a diagram illustrating an example Control Information subfield format 1800 in an Extremely High Throughput (EHT) link adaptation (ELA) Control subfield, which may be used in combination with any of other embodiments described herein. The Control Information subfield in an EHT Control subfield may include information or control information related to the EHT link adaptation (ELA) or EHT link adaptation procedure. For example, as illustrated in FIG. 18, the Control Information subfield may include, but is not limited to, an Unsolicited MFB subfield 1802, an MRQ subfield 1804, an NSS subfield 1806, an EHT-MCS subfield 1808, an RU Allocation subfield 1810, a BW subfield 1812, a PS160 subfield 1814, an MSI/Partial PPDU Parameters subfield 1816, a Tx beamforming subfield 1818, and a UL EHT TB PPDU MFB subfield 1820. Example explanations of ELA Control subfields are indicated in Table 8.

**Table 8 Exemplary explanation of ELA Control subfields**

| Subfield | Meaning | Definition |
|---|---|---|
| Unsolicited MFB | Unsolicited MFB indicator | Set to 1 if the ELA Control is an unsolicited MFB |
| MRQ | ELA feedback request indicator | Set to 1 and set Unsolicited MFB subfield to 0 to request an ELA feedback. |
| | | Set to 1 and set Unsolicited MFB subfield to 0 respond to an ELA request |
| | | If the Unsolicited MFB subfield is 1, the MRQ subfield is reserved |
| NSS | Recommended number of spatial streams | If the Unsolicited MFB subfield is 1 and the UL EHT TB PPDU MFB subfield is 0 or if the Unsolicited MFB subfield is 0 and the MRQ subfield is 0, the NSS subfield indicates the recommended number of spatial streams to the PPDU sent to the STA, NSS, and is set to NSS - 1. |
| | | If the Unsolicited MFB subfield is 1 and the UL EHT TB PPDU MFB subfield is 1, the NSS subfield indicates the recommended number of spatial streams to the EHT TB PPDU sent from the STA, NSS, and is set to NSS - 1. |
| | | Otherwise, this subfield is reserved. |
| EHT-MCS | Recommended EHT-MCS | If the Unsolicited MFB subfield is 1 and the UL EHT TB PPDU MFB subfield is 0 or if the Unsolicited MFB subfield is 0 and the MRQ subfield is 0, the EHT-MCS subfield indicates the recommended |
| | | EHT-MCS of the PPDU sent to the STA, and is set to the EHT-MCS index. |
| | | If the Unsolicited MFB subfield is 1 and the UL EHT TB PPDU MFB subfield is 1, the EHT-MCS subfield indicates the recommended EHT-MCS of the EHT TB PPDU sent from the STA, and is set to the EHT-MCS. |
| | | Otherwise, this subfield is reserved. |
| RU Allocation | RU of the recommended HE-MCS/RU specified by MFB requester to get feedback | If the Unsolicited MFB subfield is 1 and the UL EHT TB PPDU MFB subfield is 0, the RU Allocation subfield indicates the RU for which the recommended EHT-MCS applies to the PPDU sent to the STA. |
| | | If the Unsolicited MFB subfield is 0 and the MRQ subfield is 1, the RU subfield indicates the RU requested by the MFB requester to get feedback. |
| | | The RU Allocation subfield is interpreted with the BW subfield to specify the RU. |
| | | The RU index encoding combined with BW and PS160 is as defined in EHT Trigger frame. |
| | | If the Unsolicited MFB subfield is 1 and the UL EHT TB PPDU MFB subfield is 1, the RU Allocation subfield indicates the RU for which the recommended EHT-MCS applies to the EHT TB PPDU sent from the STA and that the actual allocation of the RU can be ignored by the recipient. |
| | | Otherwise, this subfield is reserved. |
| BW | Bandwidth of the recommended EHT-MCS/Bandwidth specified by MFB requester to get feedback | If the Unsolicited MFB subfield is 1 and the UL EHT TB PPDU MFB subfield is 0, the BW subfield indicates the bandwidth for which the recommended EHT-MCS applies to the PPDU sent to the STA. |
| | | If the Unsolicited MFB subfield is 1 and the UL HE TB PPDU MFB subfield is 1, the BW subfield indicates the bandwidth for which the recommended EHT-MCS applies to the HE TB PPDU sent from the STA. |
| | | If the Unsolicited MFB subfield is 0 and the MRQ subfield is 1, the BW subfield indicates the bandwidth |
| | | requested by the MFB requester to get feedback. |
| | | Set to 0 for 20 MHz |
| | | Set to 1 for 40 MHz |
| | | Set to 2 for 80 MHz |
| | | Set to 3 for 160 MHz |
| | | Set to 4 for 320 MHz |
| PS160 | | The RU Allocation subfield, BW subfield, and PS160 subfield identify the size and the location of the RU/MRU. |
| MSI/Partial PPDU Parameters | Partial parameters of the measured PDU/MRQ sequence identifier | If the Unsolicited MFB subfield is 0 and the MRQ subfield is 1, the MSI/Partial PPDU Parameters subfield contains a sequence number in the range 0 to 6 that identifies the specific EHT-MCS feedback request. |
| | | If the Unsolicited MFB subfield is 0 and the MRQ subfield is 0, the MSI/Partial PPDU Parameters subfield contains a sequence number in the range 0 to 6 that responds to the specific solicited EHT-MCS feedback request. |
| | | If the Unsolicited MFB subfield is 1, the MSI/Partial PPDU Parameters subfield contains the PPDU Format and Coding Type subfields as shown in FIG. 19. |
| Tx Beamforming | Transmission type of the measured PPDU | If the Unsolicited MFB subfield is 1 and the UL EHT TB PPDU MFB subfield is 0, then the Tx Beamforming subfield indicates whether or not the PPDU from which the unsolicited MFB was estimated is beamformed. |
| | | Set to 0 for non-beamformed PPDU Set to 1 for beamformed PPDU |
| | | Otherwise, this subfield is reserved. |
| UL EHT TB PPDU MFB | UL EHT TB PPDU MFB indication | If the Unsolicited MFB subfield is 1, a value of 1 in this subfield indicates that the NSS, EHT-MCS, BW and RU Allocation fields represent the recommended MFB for the EHT TB PPDU sent from the STA. |
| | | If the Unsolicited MFB subfield is 1, a value of 0 in this subfield indicates that the NSS, EHT-MCS, BW and RU Allocation fields represent the recommended MFB for the EHT MU PPDU sent from the STA. |

FIG. 19 is a diagram illustrating an example MSI/Partial PPDU Parameters subfield format 1900 if the Unsolicited MFB subfield is 1, which may be used in combination with any of other embodiments described herein. As illustrated in FIG. 19, the MSI/Partial PPDU Parameters subfield 1900 may include, but is not limited to, a PPDU Format subfield 1905 and a Coding Type subfield 1910. In an example, the MSI/Partial PPDU Parameters subfield 1900 illustrated in FIG. 19 is when the Unsolicited MFB subfield is 1.

The PPDU Format subfield 1905 may indicate the format of the PPDU from which the unsolicited MFB was estimated:
Set 0 for an EHT MU PPDU (DL OFDMA);
Set 1 for an EHT MU PPDU (Transmission to a single user or NDP);
Set 2 for an EHT MU PPDU (DL MU-MIMO); and
Set 3 for an EHT TB PPDU when UL EHT TB PPDU MFB is 1; for an UL EHT MU PPDU when UL EHT TB PPDU MFB is 0.

The NSS subfield (1806 in FIG. 18) can be used solely to show the recommended NSS (up to 8 values of spatial stream number, for example, 1-8 or 1, 2, 3, 4, 8, 12, 14, 16 or any 8 values from 1 -16) . Alternatively or additionally, the NSS subfield 1806 can be combined with the BW subfield 1812 to indicate the recommended number of spatial streams which is more than 8. Table 9 depicts the exemplary definition of the recommended number of spatial streams using the combined indication of BW subfield 1812 and NSS subfield 1806.

**Table 9 Exemplary illustration of the recommended number of spatial streams using the combined indication of BW subfield and Nss subfield**

| BW subfield (3bits) | Nss subfield (3bits) | Bandwidth of the PPDU | Recommended number of spatial streams (for the PPDU sent to the STA when the Unsolicited MFB subfield is 1 and the UL EHT TB PPDU MFB subfield is 0 or if the Unsolicited |
|---|---|---|---|
| | | | MFB subfield is 0 and the MRQ subfield is 0; or for the PPDU sent from the STA when Unsolicited MFB subfield is 1 and the UL EHT TB PPDU MFB subfield is 1) |
| 0 | N, 0 ≤ *N* ≤ 7 | 20MHz | N + 1 |
| 1 | N, 0 ≤ *N* ≤ 7 | 40MHz | N + 1 |
| 2 | N, 0 ≤ *N* ≤ 7 | 80MHz | N + 1 |
| 3 | N, 0 ≤ *N* ≤ 7 | 160MHz | N + 1 |
| 4 | N, 0 ≤ *N* ≤ 7 | 320MHz | N + 1 |
| 5 | N, 0 ≤ *N* ≤ 7 | 80MHz | N + const + 1 (const >0), e.g., const = 8, N + 8 + 1 |
| 6 | N, 0 ≤ *N* ≤ 7 | 160MHz | N + const + 1 (const >0), e.g., const = 8, N + 8 + 1 |
| 7 | N, 0 ≤ *N* ≤ 7 | 320MHz | N + const + 1 (const >0), e.g., const = 8, N + 8 + 1 |

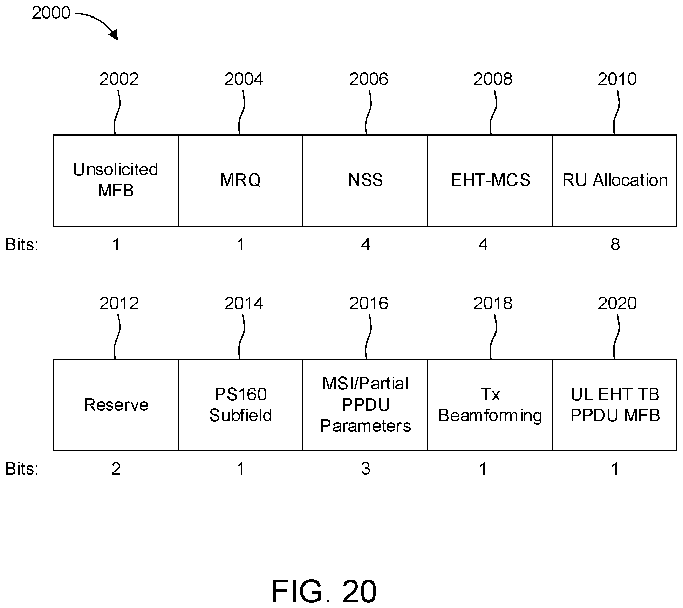

Alternatively or additionally, the Control Information subfield in an EHT Control subfield may include information related to ELA procedure as described in FIG. 20. FIG. 20 is a diagram illustrating an example Control Information subfield format 2000 in an ELA Control subfield (e.g., without bandwidth (BW)), which may be used in combination with any of other embodiments described herein. As illustrated in FIG. 20, the Control Information subfield 2000 may include, but is not limited to, an Unsolicited MFB subfield 2002, an MRQ subfield 2004, an NSS subfield 2006, an EHT-MCS subfield 2008, an RU Allocation subfield 2010, a Reserved subfield 2012, a PS160 subfield 2014, an MSI/Partial PPDU Parameters subfield 2016, a Tx beamforming subfield 2018, and a UL EHT TB PPDU MFB subfield 2020. In this example, no bandwidth information may be needed and the NSS subfield 2006 may include multiple bits (e.g., 4 bits). The recommended number of spatial streams may be equal to the value of Nss + 1, where the value of Nss is from 0 to 15.

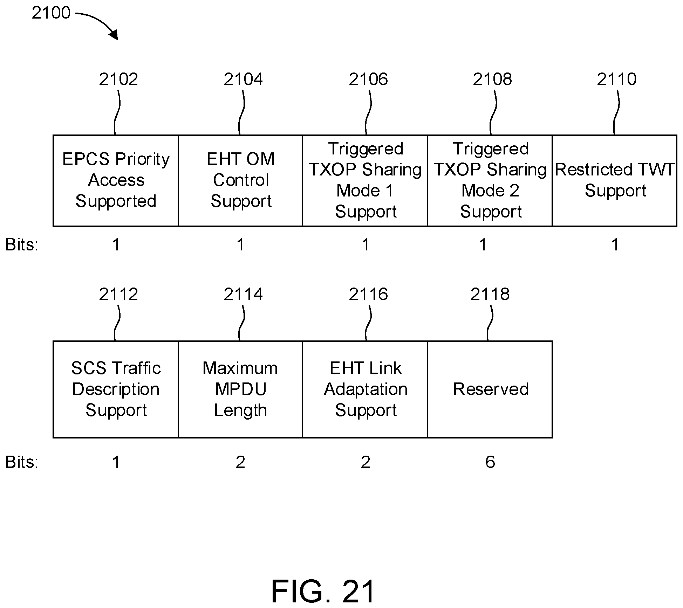

Embodiments for EHT Capabilities are described herein. In one embodiment, EHT Link Adaptation Support is included in a EHT MAC Capabilities Information field. FIG. 21 is a diagram illustrating an example Enhanced EHT MAC Capabilities Information field format 2100, which may be used in combination with any of other embodiments described herein. As illustrated in FIG. 21, the Enhanced EHT MAC Capabilities Information field 2100 may include, but is not limited to, an EPC Priority Access Supported subfield 2102, an EHT OM Control Support subfield 2104, a Triggered TXOP Sharing Mode 1 Support subfield 2106, a Triggered TXOP Sharing Mode 2 Support subfield 2108, a Restricted TWT Support subfield 2110, an SCS Traffic Description Support subfield 2112, a Maximum MODU Length subfield 2114, an EHT Link Adaptation Support subfield 2116, and a Reserved subfield 2118.

Table 10 gives the exemplary illustration of the EHT Link Adaptation Support subfield 2116. It is noted that the encoding corresponding to the value of EHT Link Adaptation Support subfield 2116 may not be fixed as indicated in Table 10. For example, the value of the EHT Link Adaptation Support subfield 2116 may be set to 1 if the STA can receive and provide only unsolicited EHT MFB and the value 2 is reserved.

**Table 10 Exemplary EHT Link Adaptation subfield illustration**

| Subfield | Definition | Encoding |
|---|---|---|
| EHT Link Adaptation Support | Indicates support for EHT link adaptation using the ELA Control subfield | If the +HTC-HE Support field is 1: Set to 0 (No feedback) if the STA does not provide EHT MFB |
| | | Set to 2 (Unsolicited) if the STA can receive and provide only unsolicited EHT MFB. |
| | | Set to 3 (Solicited and unsolicited) if the STA is capable of receiving and providing EHT MFB in response to EHT MRQ and if the STA can receive and provide unsolicited EHT MFB. |
| | | The value 1 is reserved. |
| | | EHT MFB and EHT MRQ are MFB and MRQ using ELA Control subfield, respectively. |
| | | Reserved if the +HTC-HE Support subfield is 0 |

Embodiments for HT Control field operation are described herein. In one embodiment, Table 11 depicts the exemplary condition for including the Control subfield variant, ELA.

**Table 11 Condition for including Control subfield variant, ELA**

| Control subfield variant | Condition |
|---|---|
| ELA | The transmitting STA follows the EHT link adaptation procedure and the recipient STA has set the EHT Link Adaptation Support subfield in the EHT MAC Capabilities Information field in the EHT Capabilities elements to 1 |

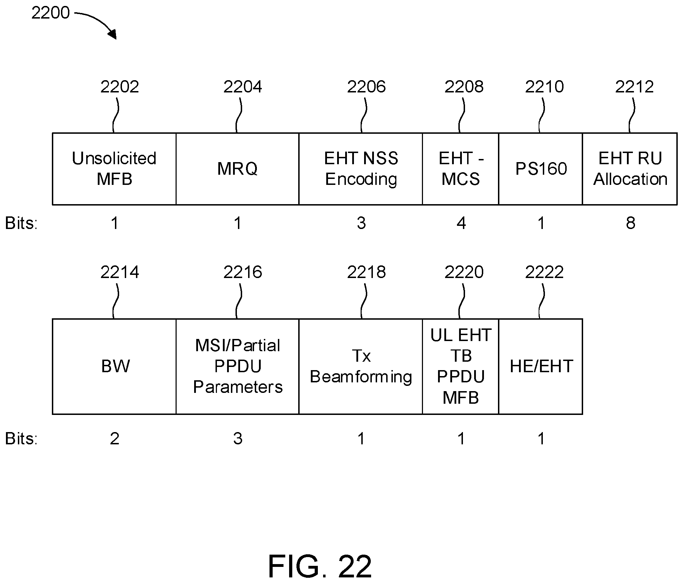

Embodiments for enhanced HLA (e.g., using HLA) are described herein. In one embodiment, the HE HLA Control field may be modified for EHT link adaptation. FIG. 22 is a diagram illustrating an example HLA control field EHT variant (ELA) 2200, which may be used in combination with any of other embodiments described herein. As illustrated in FIG. 22, the ELA 2200 may include, but is not limited to, an Unsolicited MFB subfield 2202, an MRQ subfield 2204, an EHT NSS Encoding subfield 2206, an EHT-MCS subfield 2208, a PS 160 subfield 2210, an EHT RU Allocation subfield 2212, a BW subfield 2214, an MSI/Partial PPDU Parameters subfield 2216, a Tx beamforming subfield 2218, a UL EHT TB PPDU MFB subfield 2220, and an HE/EHT subfield 2222. The reserved bit in the HE HLA Control field (e.g., in FIG. 5) may be used to indicate that this is an HLA Control field EHT variant, for example, using the HE/EHT subfield 2222. When the bit is set, the format of HLA Control field EHT variant (ELA) 2200 may be depicted as FIG. 22. It is noted that the number of bits assigned for each subfield may be an example and other numbers of bits may be possible.

In one embodiment, the EHT NSS Encoding subfield 2206 may be multiple bit (e.g., 4 bits) and a direct mapping may be used to indicate the Nss spatial stream recommended (i.e., the value of this subfield is set to Nss-1). In one embodiment, the EHT NSS Encoding subfield 2206 may use 3 bits and selected Nss spatial stream may be recommended in the HLA Control field. An exemplary encoding of the EHT NSS subfield is given in Table 12.

**Table 12: encoding of EHT NSS Encoding subfield**

| EHT NSS Encoding field value | Nss |
|---|---|
| 0 | 1 |
| 1 | 2 |
| 2 | 4 |
| 3 | 6 |
| 4 | 8 |
| 5 | 10 |
| 6 | 12 |
| 7 | 16 |

The EHT MCS 2208 subfield may indicate the recommended EHT MCS.

The PS160 subfield 2210 and the EHT RU Allocation subfield 2212 together may be used to indicate the RU and/or multiple RU (MRU) for which the MCS/Nss are recommended or requested. The PS160 subfield 2210 set to 1 may indicate the RU/MRU located or partially located in the primary 160 MHz subchannel. The PS160 subfield 2210 set to 0 may indicate the RU/MRU located or partially located in the secondary 160 MHz subchannel. The encoding of the PS160 subfield 2210 and the EHT RU Allocation subfield 2212 may follow the PPDU type defined for EHT Trigger frame in 802.11be. The PPDU type may correspond to the recommended MCS and Nss. In one embodiment, the EHT RU Allocation subfield 2212, BW subfield 2214, and PS160 subfield 2210 may identify the size and the location of the RU/MRU.

In one embodiment, the BW subfield 2214 may be reserved in the EHT variant (ELA). Alternatively or additionally, the 2 bits may be used by other methods or procedures described in this disclosure.

In one embodiment, the MSI/Partial PPDU Parameters subfield 2216 may indicate the parameters of the measured PPDU for which the MCS and Nss are recommended when it is solicited feedback (e.g., the Unsolicited MFB 2202 is 0) or the PPDU for which the MCS and Nss are recommended when it is unsolicited feedback, (e.g., the Unsolicited MFB 2202 is 1). In one embodiment, if the Unsolicited MFB subfield 2202 is 1 or true, the MSI/Partial PPDU Parameters subfield 2216 may include the EHT PPDU Format and Coding Type subfield. The encoding of the first two bits of the MSI/Partial PPDU Parameters subfield 2216 is given in Table 13.

**Table 13: Encoding of the first two bits of the MSI/Partial PPDU Parameters subfield**

| Value | EHT PPDU format | PPDU type | Note |
|---|---|---|---|
| 0 | EHT MU PPDU | 0 | DL OFDMA |
| 1 | EHT MU PPDU | 1 | DL/UL transmission to a single user or NDP |
| 2 | EHT MU PPDU | 2 | DL MU-MIMO |
| 3 | EHT TB | any | TB transmission |

The UL EHT TB PPDU MFB subfield 2220 may indicate that the Nss, EHT-MCS, BW and RU Allocation fields represent the recommended MFB for the EHT TB PPDU sent from the STA. For example, when the Unsolicited MFB subfield 2202 is 1, a value of 1 in the UL EHT TB PPDU MFB subfield 2220 may indicate the EHT NSS Encoding subfield 2206, EHT-MCS subfield 2208, BW subfield 2214, and EHT RU Allocation subfield 2212 represent the recommended MCS feedback (MFB) for the EHT TB PPDU sent from the STA. When the Unsolicited MFB subfield 2202 is 1, a value of 0 in the UL EHT TB PPDU MFB subfield 2220 may indicate the EHT NSS Encoding subfield 2206, EHT-MCS subfield 2208, BW subfield 2214, and EHT RU Allocation subfield 2212 represent the recommended MFB for the EHT MU PPDU sent from the STA.

The HE/EHT subfield 2222 may indicate whether it is a HE variant (HLA) or EHT variant (ELA). In other words, the HE/EHT subfield 2222 may indicate whether the STA provides feedback (or a PPDU) with the HE format or EHT format. The HE/EHT subfield 2222 may also indicate if the A-Control field is HLA or ELA. For example, when the HE/EHT subfield 2222 is set to 0, it may represent HLA. When the HE/EHT subfield 2222 is set to 1, it may represent ELA. Alternatively or additionally, there may be N bits, where N >= 1, used to indicate the different version of link adaptation.

Embodiments for enhanced unsolicited MCS feedback (MFB) requirement are described herein. In one embodiment, a STA may send an unsolicited MFB for the received PPDU within a certain amount time, x µs (e.g., x µs= SIFS duration) after receiving the PPDU which is being measured/estimated for the recommended MCS/Nss or the like. Alternatively or additionally, the STA may send the unsolicited MFB for the received PPDU which is being measured/estimated within the same TXOP. Alternatively or additionally, the STA may send the unsolicited MFB when the measured PPDU was transmitted to a single user or the Null Data Packet (NDP) transmission. In other words, one bit of the MCS Request (MRQ) Sequence Identifier (MSI)/Partial PPDU Parameters subfield may be used to indicate that the estimated PPDU is a EHT MU PPDU or EHT TB PPDU. For example, this one bit may represent that the estimated PPDU is a EHT MU PPDU when this bit is set to 1; and/or this bit may represent that the estimated PPDU is a EHT TB PPDU when this bit is set to 0.

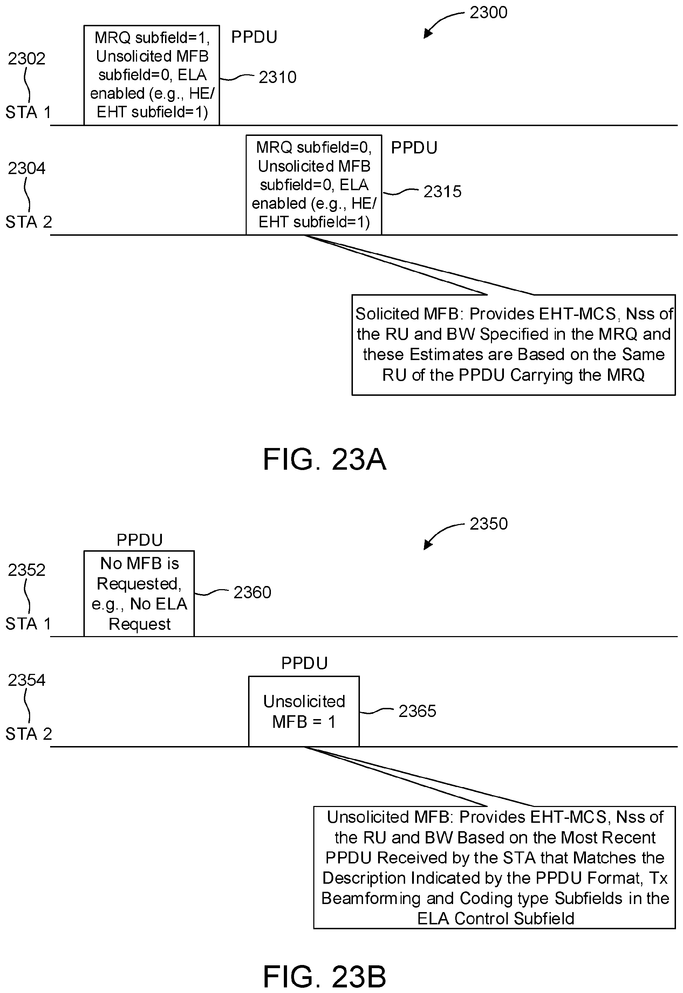

Embodiments for ELA Operation are described herein. FIG. 23A is a diagram illustrating an example solicited MCS feedback operation procedure 2300, which may be used in combination with any of other embodiments described herein. FIG. 23B is a diagram illustrating an example unsolicited MFB operation procedure 2350, which may be used in combination with any of other embodiments described herein. These example ELA operation procedures may use the ELA control subfield including solicited MCS feedback (MFB) indication and/or unsolicited MFB indication. In one embodiment, the frame exchange sequences may include PPDUs including an HE variant HT Control field (i.e., ELA Control subfield). The exemplary ELA operation sequences using the ELA Control subfield are described in FIG. 23A and FIG. 23B.

In the case of solicited MFB illustrated in FIG. 23A, the MFB requester, STA1 2302, may send a PPDU 2310 to the MFB responder, STA2 2304, with specifying the RU index and BW that request the link adaption feedback. Upon receipt of the ELA Control subfield with the MRQ subfield equal to 1, STA2 2304 may compute the EHT-MCS and Nss of the RU and BW specified in the MRQ, and these estimates may be based on the same RU of the PPDU carrying the MRQ. The PPDU 2310 carrying MRQ may include the RU requested for MFB. STA2 2304 may include the estimated EHT-MCS, Nss of the RU and BW specified in the received MRQ in the ELA Control subfield which is carried in the PPDU 2315. The MFB responder, STA2 2304, may label the results of this computation with the MSI value from the ELA Control subfield in the received frame carrying the MRQ. The MFB responder, STA2 2304, may include the received MSI value in the MSI field of the corresponding response frame. In the case of unsolicited MFB illustrated in FIG. 23B, STA2 2354 may send out the unsolicited MFB with the Unsolicited MFB subfield (in the ELA Control subfield) equal to 1. Unsolicited EHT-MCS, Nss, BW, and RU estimates reported in ELA Control subfield sent by STA2 2354 may be computed based on the most recent PPDU received by STA2 2354 (e.g., sent by STA1 2352) that matches the description indicated by the PPDU format, Tx Beamforming, and Coding Type subfields in the ELA Control subfield. For example, STA2 2354 may determine estimates of EHT-MCS, Nss, BW, and RU based on the most recently received PPDU (e.g., PPDU 2360 received from STA1 2352) and report the estimates to the STA (e. g., STA1 2352) which sent the PPDU (e.g., PPDU 2360) in an ELA Control subfield. The estimates of the EHT-MCS, Nss, BW, and RU may be included in the PPDU 2365. The PPDU 2365 sent by STA2 2364 may indicate the PPDU format, Tx Beamforming and Coding Types of the most recently received PPDU (e.g., the PPDU 2360 received from STA1 2352).

In one embodiment, as illustrated in FIG. 23A, STA1 2302 (i.e., MFB requestor) may transmit, to STA2 2304 (i.e., MFB responder) a first PPDU 2310 that includes an A-Control field with a ELA Control subfield. The ELA Control subfield may include an Unsolicited MFB subfield, an MRQ subfield, an EHT NSS Encoding subfield, an EHT-MCS subfield, a PS160 subfield, an EHT RU Allocation subfield, a BW subfield, an MSI/Partial PPDU Parameters subfield, a Tx beamforming subfield, a UL EHT TB PPDU MFB subfield, and an HE/EHT subfield. The STA1 2302 may set the Unsolicited MFB subfield to 0 (i.e., false), the MRQ subfield to 1 (i.e., true), and the HE/EHT subfield to 1 (i.e., true) to indicate to STA2 2304 that the first PPDU 2310 is to request/solicit ELA feedback from STA2 2304 for the link adaptation. The EHT RU Allocation subfield of the first PPDU 2310 may include one or more RUs that STA2 2304 is to measure for the ELA feedback. The BW subfield of the first PPDU 2310 may include a BW that the STA2 2304 is to measure for the ELA feedback. The PS160 subfield of the first PPDU 2310 may indicate whether the STA2 2304 is to measure a primary 160 MHz channel or a secondary 160 MHz channel for the ELA feedback.

Once the STA2 2304 receives, from the STA1 2302, the first PPDU 2310, the STA2 2304 may measure the channel condition/quality based on the one or more RUs of the EHT RU Allocation subfield, the BW of the BW subfield, and/or a 160 MHz channel indicated by the PS160 subfield. In an example, the STA2 2304 may identify the size and the location of the RU/MRU based on these three subfields or a least one of these three subfields. The STA2 2304 may then determine, based on the channel condition/quality, a recommended EHT-MCS and a recommended number of spatial streams (Nss) for the ELA feedback to STA1 2302. The STA2 2304 may transmit, to the STA1 2302, a second PPDU 2315 with the recommended EHT-MCS and the recommended Nss. Specifically, similar to the first PPDU 2310, the second PPDU 2315 may include an A-Control field with a ELA Control subfield. The ELA Control subfield may include an Unsolicited MFB subfield, an MRQ subfield, an EHT NSS Encoding subfield, an EHT-MCS subfield, a PS160 subfield, an EHT RU Allocation subfield, a BW subfield, an MSI/Partial PPDU Parameters subfield, a Tx beamforming subfield, a UL EHT TB PPDU MFB subfield, and an HE/EHT subfield. The STA2 2304 may set the EHT-MCS subfield and the EHT NSS Encoding subfield to the recommended EHT-MCS and the recommended Nss, respectively. The STA2 2304 may set the Unsolicited MFB subfield to 0 (i.e., false), the MRQ subfield to 0 (i.e., false), and the HE/EHT subfield to 1 (i.e., true) to indicate to STA1 2302 that the second PPDU 2315 is a response to the ELA feedback request from the STA1 2302.

In one embodiment, as illustrated in FIG. 23B, STA2 2354 may transmit, to STA1 2352, a PPDU 2365 that includes ELA feedback for the link adaption without any request/solicitation from STA1 2352. Specifically, STA2 2354 may receive a PPDU 2360 from STA1 2352. The PPDU 2360 may not include any indications of MFB and/or ELA request. Regardless of the received PPDU 2360, the STA2 2354 may determine a primary/secondary 160 MHz channel, one or more RUs, and/or a BW to measure the channel condition/quality. The STA2 2304 may then determine, based on the channel condition/quality, a recommended EHT-MCS and a recommended number of spatial streams (Nss) for the ELA feedback to STA1 2352. The STA2 2354 may transmit, to the STA1 2352, a PPDU 2365 with the recommended EHT-MCS and the recommended Nss. Specifically, the PPDU 2365 may include an A-Control field with a ELA Control subfield. The ELA Control subfield may include an Unsolicited MFB subfield, an MRQ subfield, an EHT NSS Encoding subfield, an EHT-MCS subfield, a PS160 subfield, an EHT RU Allocation subfield, a BW subfield, an MSI/Partial PPDU Parameters subfield, a Tx beamforming subfield, a UL EHT TB PPDU MFB subfield, and an HE/EHT subfield. The STA2 2354 may set the EHT-MCS subfield and the EHT NSS Encoding subfield to the recommended EHT-MCS and the recommended Nss, respectively. The STA2 2354 may set the Unsolicited MFB subfield to 1 (i.e., true) to indicate to STA1 2352 that the PPDU 2365 is an unsolicited ELA feedback. The STA2 2354 may set the PS160 subfield to the determined 160 MHz channel, the EHT RU Allocation subfield to the determined one or more RUs, and the BW subfield to the determined BW for the channel measurement. The PPDU 2365 may include these three subfields to indicate to the STA1 2360 which part of the channel was measured by the STA2 2365. Specifically, STA2 2354 may indicate to the STA1 2352, using these three subfields, RU/MRU that the STA2 2354 measured for the recommended EHT MCS and the recommended Nss. Based on these three subfields, the STA2 2354 may indicate that the recommended EHT MCS and the recommended Nss corresponding to the RU/MRU the STA2 2354 measured. The STA2 2354 may provide the recommended EHT MCS and the recommended Nss based on the measurement of most recently received PPDU or previously received PPDU. The STA2 2354 may provide the recommended EHT MCS and the recommended Nss periodically or when the STA2 2353 senses changes in the channel condition/qualities.

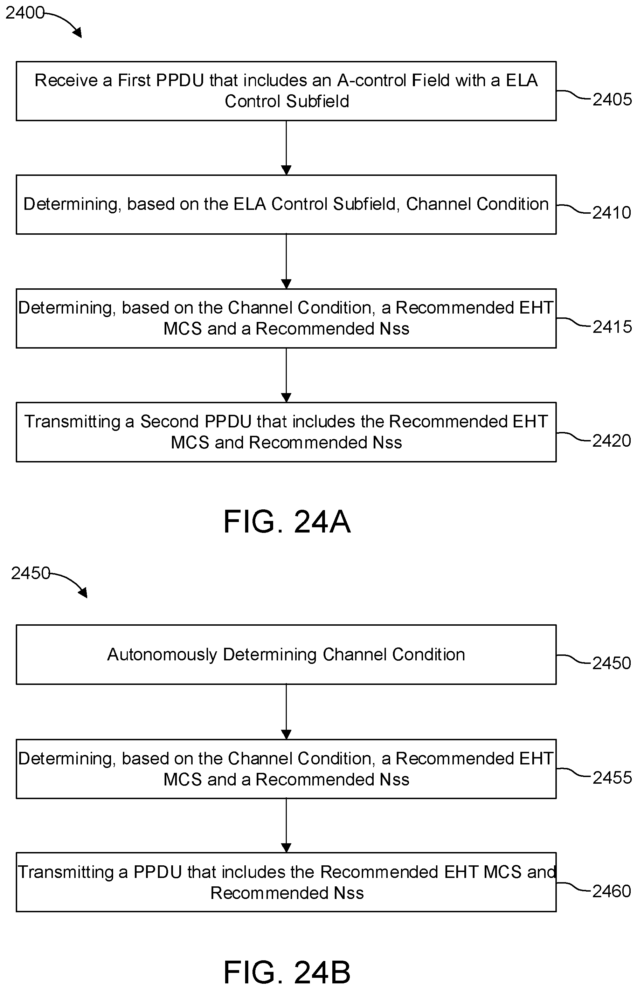

FIG. 24A is a diagram illustrating the claimed embodiment for solicited MCS feedback (MFB) operation procedure 2400, which may be used in combination with any of other embodiments described herein. At step 2405, a STA (i.e., receiver or responder) receives a first PPDU that includes an A-control field. The A-control field may include a Control subfield, which may include an ELA Control subfield. The ELA Control subfield may include an Unsolicited MFB subfield, an MRQ subfield, an EHT NSS Encoding subfield, an EHT-MCS subfield, includes a PS160 subfield, may include an EHT RU Allocation subfield, a BW subfield, an MSI/Partial PPDU Parameters subfield, a Tx beamforming subfield, a UL EHT TB PPDU MFB subfield, and includes an HE/EHT subfield, as illustrated in FIG. 22. The HT/EHT subfield indicates whether a second PPDU to be transmitted by the STA is generated based on HE-related parameters or EHT-related parameters. The EHT-related parameters may include, but are not limited to, the EHT-MCS index, the number of spatial streams for EHT transmission, a primary/secondary 160 MHz channel indication, an EHT PPDU format, or the like. The first PS160 subfield indicates a primary 160 MHz channel or a secondary 160 MHz channel that the STA will measure. For example, the first PS160 subfield may include an one bit indicating a primary 160 MHz channel or a secondary 160 MHz channel. The STA may determine, based on the PS160 subfield, a 160 MHz channel from among the primary 160 MHz channel and the secondary 160 MHz channel. In one embodiment, the STA may measure the channel quality of the determined 160 MHz channel. The STA (i.e., transmitter or solicitor) transmitted the first PPDU may be an access point (AP) or a non-AP STA.

At step 2410, the STA may determine, based on the PS160 subfield, an EHT RU Allocation subfield, and a BW subfield in the ELA Control subfield, channel condition. Specifically, based on the RU/MRU of the EHT RU Allocation subfield and the BW indicted by the BW subfield, the STA may identify the size and location of the one or more resources that the STA is to measure for the channel condition. The STA may determine, together with the PS160 subfield, that the one or more resources to be measured are located in a primary 160 MHz channel or a secondary 160 MHz channel. In one embodiment, the STA may read the preamble of a PPDU and measure a signal strength (e.g., RSRP, RSSI, RSRQ, or the like) or SINR of the PPDU to determine the channel condition. At step 2415, the STA may determine, based on the channel condition, an MCS index and a number of spatial streams for link adaptation. These MCS index and number of spatial streams may be used by another STA to encode or transmit data. In case of the solicited MFB operation, the MSI/Partial PPDU parameters subfield may include a sequence number ranges from 0 to 6 that identifies the specific EHT MCS feedback request. For example, the sequence number may indicate a PPDU that the STA received for a EHT MCS feedback request or the STA transmitted for a EHT MCS feedback response.

At step 2420, the STA sends a second PPDU with the MCS index and the number of spatial streams determined. The second PPDU includes an A-Control field with a ELA Control subfield. The ELA Control subfield may include an Unsolicited MFB subfield, an MRQ subfield, includes an EHT NSS Encoding subfield an EHT-MCS subfield, a PS160 subfield, may include an EHT RU Allocation subfield, a BW subfield, an MSI/Partial PPDL Parameters subfield, a Tx beamforming subfield, a UL EHT TB PPDU MFB subfield, and an HE/EHT subfield. The STA may set the EHT-MCS subfield to the MCS index and the EHT NSS Encoding subfield to the number of spatial streams. In the second PPDU, the PS160 subfield, the EHT RU Allocation subfield, and the BW subfield may indicate to another STA which part of the channel was measured by the STA. Specifically, the PS160 subfield indicates that a primary or secondary 160 MHz channel is selected for the measurement. The EHT RU Allocation and BW may indicate the size and location of one or more resources measured on the selected 160 MHz channel.

FIG. 24B is a diagram illustrating another example unsolicited MFB operation procedure 2450, which may be used in combination with any of other embodiments described herein. At step 2450, the STA may autonomously determine the channel condition based on one or more of most recently received PPDUs or previously received PPDUs. At step 2455, the STA may determine, based on the channel condition, a MCS index and a number of spatial streams. At step 2460, the STA may transmit a PPDU that includes an A-Control field. The A-control field may include a Control subfield, which may include an ELA Control subfield. The ELA Control subfield may include an Unsolicited MFB subfield, an MRQ subfield, an EHT NSS Encoding subfield, an EHT-MCS subfield, a PS160 subfield, an EHT RU Allocation subfield, a BW subfield, an MSI/Partial PPDU Parameters subfield, a Tx beamforming subfield, a UL EHT TB PPDU MFB subfield, and an HE/EHT subfield, as illustrated in FIG. 22. The SAT may set the EHT-MCS subfield to the determined MCS index and the EHT NSS Encoding subfield to the determined number of spatial streams. The STA may set the HT/EHT subfield to a value/bit/indication indicating that the PPDU transmitted by the STA is generated based on EHT-related parameters. The EHT-related parameters may include, but are not limited to, the EHT-MCS, the number of spatial streams for EHT transmission, a primary/secondary 160 MHz channel indication, an EHT PPDU format, or the like. The STA may set the PS160 subfield, the EHT RU Allocation subfield, and the BW subfield to indicate to another STA the part of the channel measured by the STA. Specifically, the PS160 subfield may indicate whether a primary or secondary 160 MHz channel is selected for the measurement. The EHT RU Allocation and BW may indicate the size and location of one or more resources measured by the STA on the selected 160 MHz channel. In case of the unsolicited MFB operation, the STA may set the MSI/Partial PPDU parameters subfield to one or more values/bits/indications indicating the type/format of the PPDU measured by the STA and/or the Coding Type applied by the STA. For example, the type/format of the PPDU may be a TB PPDU or MU PPDU. The Coding Type may be Binary Convolutional Codes (BCC) and/or Low-Density Parity-Check (LDPC). The STA transmitted the PPDU with the MCS index and the number of spatial streams may be an access point (AP) or a non-AP STA.

Embodiments for enhanced Unsolicited MFB in HE devices are described herein. In this embodiment, how to enhance the current unsolicited MFB to differentiate the MCS/SS feedback between MU-MIMO and OFDMA for HE devices are described. B25 in the Control Information subfield in an HLA Control subfield can be used to indicate that the estimated PPDU is using MU-MIMO transmission or OFDMA transmission. In other words, this bit may be used to indicate if the recommended HE-MCS, Nss, DCM, BW and RU estimates reported in an HLA Control subfield are for the most recently received PPDU which is using OFDMA transmission or MU-MIMO transmission when the Unsolicited MFB subfield is equal to 1. For example, in the case of unsolicited MFB (i.e., the Unsolicited MFB subfield equals to 1), when the PPDU format is HE_MU and B25 = 1, it may refer to the estimation that is based on the PPDU via MU-MIMO transmission; when the PPDU format is HE_MU and B25 = 0, it may refer to the estimation that is based on the PPDU via OFDMA transmission. Note that the actual B25 value corresponding MU-MIMO or OFDMA transmission may be changed.

Embodiments for enhanced MU-MIMO Link Adaptation are described herein. In these embodiments, the MU-MIMO link adaptation via feedback indication is described. In one embodiment, one bit (e.g., B25) in the Control Information subfield in an HLA Control subfield can be used to indicate which group of STAs is paired with the recipient STA of the estimated PPDU with HE-MU format when the Unsolicited MFB subfield is equal to 1. For example, in the case of unsolicited MFB (i.e., the Unsolicited MFB subfield equals to 1) when the most recently received PPDU format is HE_MU and B25 = 1, the receiver of this estimation that is the transmitter of the estimated PPDU may understand that the estimation is based on the PPDU via MU-MIMO transmission grouped by the STA that belongs to Group 1 and the transmitter of the unsolicited MFB; when the most recent received PPDU format is HE_MU and B25 = 0, the receiver of this estimation that is the transmitter of the estimated PPDU may understand that the estimation is based on the PPDU via MU-MIMO transmission grouped by the STA that belongs to Group 0 and the transmitter of the unsolicited MFB. If the estimated PPDU format is HE_MU and most received PPDU is via OFDMA transmission, then B25 may be reserved. In other words, the receiver of the recommended MCS, Nss, DCM, BW, and RU, that is the transmitter of the most recent PPDU, may not ignore B25 when the estimated PPDU format is HE_MU and the most recently transmitted PPDU to the transmitter of the estimation is via OFMDA transmission. Similar to HE_MU (e.g., one reserved bit in FIG. 20), in the Control Information subfield in an ELA Control subfield can be used to indicate which group of STA is paired with the recipient STA of the estimated PPDU with EHT-MU format when the Unsolicited MFB subfield is equal to 1.

Embodiments for enhanced acknowledgement transmissions are described herein. In one embodiment, one or more bits in acknowledgement frame may be used to indicate the suggested or requested increase and/or decrease of MCS or information related to link adaptation. This may be referred to as simplified link adaptation. In an example, in a downlink transmission, an AP may transmit a frame to a STA using MCS *n.* By detecting the DL transmission successfully or correctly, the STA may suggest the AP to use *MCS n+1* (i.e., one level higher) or higher MCS or *MCS n-1* (i.e., one level lower) or lower MCS for next transmission in the acknowledgement frame. The AP may follow the suggestion or decline the suggestion in the next transmission.

In an example, in a non-trigger based (non-TB) uplink transmission, a non-AP STA may transmit a frame to an AP using *MCS n.* By detecting the UL transmission successfully, the AP may suggest/request the STA to use *MCS n+1* (i.e., one level higher) or MCS n-1 (i.e., one level lower) in the acknowledgement frame. The STA may follow the suggestion or decline the suggestion in the next transmission.

The suggested MCS may be used for any TID transmission or the TID(s) indicated in the acknowledgement frame, for example, the TID Info subfield in the BA Control field in the Block Ack frame.

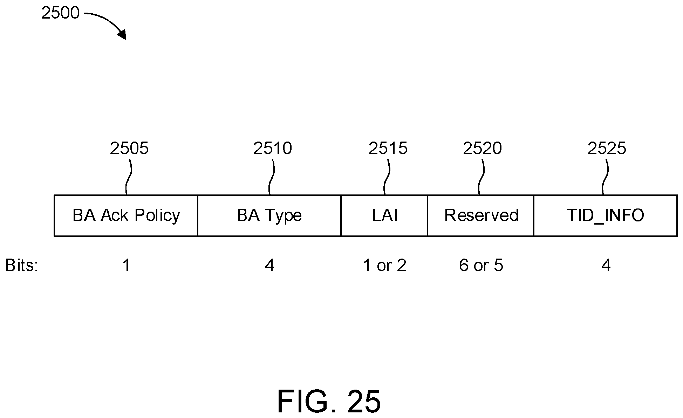

Embodiments for Modified BA Control Field are described herein. FIG. 25 is a diagram illustrating an example link adaptation enhanced BA Control field 2500, which may be used in combination with any of other embodiments described herein. As illustrated in FIG. 25, the enhanced BA Control field may include, but is not limited to, a BA Ack policy subfield 2505, a BA type subfield 2510, a Link Adaption Indication (LAI) subfield 215, a Reserved subfield 2520, and a TID-INFO subfield 2525. In one embodiment, the BA Control field in the Block Ack frame may be modified as shown in FIG. 25. The LAI subfield 2515 may be included in the enhanced BA Control field 2500. The LAI subfield 2515 may indicate that the BA frame carry link adaptation related information.

In one embodiment, the LAI subfield 2515 may be a 1-bit subfield. It may be set to 1 (or 0) if the STA which transmits the BA frame may suggest the BA receiving STA to increase MCS for next transmission. It may be set to 0 (or 1) if the STA which transmits the BA frame may suggest the BA receiving STA to reuse the same MCS for next transmission.

In one embodiment, the LAI subfield 2515 may be a 1-bit subfield. It may be set to 1 (or 0) if the STA which transmits the BA frame may suggest the BA receiving STA to decrease MCS for next transmission. It may be set to 0 (or 1) if the STA which transmits the BA frame may suggest the BA receiving STA to reuse the same MCS for next transmission.

In one embodiment, the LAI subfield 2515 may be a 2-bit (or multi-bit) subfield with four or more possible values. It may be set to value 1 if the STA which transmits the BA frame may suggest the BA receiving STA to increase MCS for next transmission. It may be set to value 2 if the STA which transmits the BA frame may suggest the BA receiving STA to decrease MCS for next transmission. It may be set to value 3 if the STA which transmits the BA frame may suggest the BA receiving STA to reuse the same MCS for next transmission.

With this embodiment, the LAI subfield 2515 may be located in the BA Control field which is carried in all BlockAck variants and therefore, all BlockAck variants may be used for simplified link adaptation.

Embodiments for modified Multi-STA BlockAck Variant are described herein. In one embodiment, a Multi-STA BlockAck frame may be modified to carry link adaptation indication. For example, the Per AID TID Info subfield in BA Info field for Multi-STA BlockAck variant when AID11 subfield is not 2045 may be modified and new combination of Ack Type subfield and TID subfield values may be used to carry link adaptation indication. Table 14 shows an example where a new combination of Ack Type subfield = 0 and TID subfield = 14 may be used to indicate an all ACK context and suggest a higher MCS level for next transmission. The existing combination of Ack Type subfield = 1 and TID subfield = 14 may be modified to indicate an all ACK context and suggest no change of MCS for next transmission. It is noted that the combinations described here are as an example, and other reserved combinations may be used for the same purpose.

**Table 14: Exemplary new and modified combinations of context of the Per AID TID Info subfield and presence of optional subfields if the AID11 subfield is not 2045**

| Ack Type subfield values | TID subfield values | Presence of Block Ack Starting Sequence Control subfield and Block Ack Bitmap subfields | Context of a Per AID TID Info subfield in a Multi-STA BlockAck frame |
|---|---|---|---|
| 1 | 14 | Not present | All ack context and no MCS change suggested |
| 0 | 14 | Not present | All ack context and higher MCS level suggested for next transmission |

Embodiments for modified Compressed BlockAck are described herein. The BA Information field of BlockAck Compressed BlockAck variant may include a Block Ack Starting Sequence Control subfield and a Block Ack Bitmap subfield. The Block Ack Starting Sequence Control subfield may include a 4-bit (or multi-bit) Fragment Number subfield and 12-bit (or multi-bit) Starting Sequence Number subfield. In one embodiment, one or more reserved values in Fragment Number subfield may be used to indicate simplified link adaptation information. One or more methods described below may be used:
(1) One reserved value in a Fragment Number subfield (e.g., [B0:B3] = [1001]) may indicate all ack context and higher MCS level is suggested for next transmission. One reserved value in a Fragment Number subfield (e.g., [B0:B3] = [1011]) may indicate all ack context and the same MCS level is suggested for next transmission. In both cases, the Block Ack Bitmap field may not present;
(2) One reserved value in a Fragment Number subfield (e.g., [B0:B3] = [1001]) may indicate higher MCS level is suggested for next transmission. One reserved value in a Fragment Number subfield (e.g., [B0:B3] = [1011]) may indicate the same MCS level is suggested for next transmission. One reserved value in a Fragment Number subfield (e.g., [B0:B3] = [1101]) may indicate the lower MCS level is suggested for next transmission. In all cases, the Block Ack Bitmap field may present; and/or
(3) One reserved value in a Fragment Number subfield (e.g., [B0:B3] = [1001]) may indicate all ack context and the Block Ack Bitmap field may not present.

Embodiments for modified Multi-TID BlockAck are described herein. The BA Information field of Multi-TID BlockAck variant may include 2 octets Per TID Info subfield and 2 octets Block Ack Starting Sequence Control subfield and a BlockAck Bitmap subfield. In one embodiment, the Block Ack Starting Sequence Control may be modified as described above. In one embodiment, Per TID Info subfield may be modified to carry simplified link adaptation information. One or more methods described below may be used:
(1) One reserved value in Per TID Info subfield may indicate all ack context and higher MCS level is suggested for next transmission with or regardless the TID identified in the TID value subfield. One reserved value in Per TID Info subfield may indicate all ack context and the same MCS level is suggested for next transmission with or regardless the TID identified in the TID value subfield. In both cases, the Block Ack Bitmap field may not present;
(2) One reserved value in Per TID Info subfield may indicate higher MCS level is suggested for next transmission with or regardless the TID identified in the TID value subfield. One reserved value in Per TID Info subfield may indicate the same MCS level is suggested for next transmission with or regardless the TID identified in the TID value subfield. One reserved value in Per TID Info subfield may indicate the lower MCS level is suggested for next transmission with or regardless the TID identified in the TID value subfield. In all cases, the Block Ack Bitmap field may present; and/or
(3) One reserved value in Per TID Info subfield may indicate all ack context and the Block Ack Bitmap field may not present.

It is noted that the all ack context described in this embodiment may be an acknowledgement to an A-MPDU that includes an MPDU that solicits an immediate response and all MPDUs included in the A-MPDU are received successfully.

Embodiments for enhanced Triggered Response Scheduling are described herein. In one embodiment, the existing HE TRS Control field may be modified and reused for EHT triggered response scheduling.

In one embodiment, the reserved bit in the HE TRS Control field may be used to indicate if the RU Allocation subfield carried in the TRS Control field is mainly located in primary 160 MHz or secondary 160 MHz. The bit may be denoted as a PS160 subfield. Using the RU Allocation subfield and PS160 subfield, a STA may be able to determine the RU and/or MRU assigned for response transmission.

In one embodiment, the PS160 subfield may not be present in the TRS Control field. Instead, a RXVECTOR parameter PS160 may be defined. A first STA may transmit a TRS Control field to a second STA in an EHT MU PPDU. In the EHT MU PPDU, if the first STA uses 4x996 tone RU, the second STA may set the RXVECTOR parameter PS160 to 0 which may indicate the primary 160 MHz or lower frequency 160 MHz subchannel. Alternatively or additionally, the second STA may set the RXVECTOR parameter PS160 to 1 which may indicate the secondary 160 MHz or higher frequency 160 MHz subchannel.

Other RU or MRU, the second STA may determine number of subcarriers/tones in the RU/MRU in the primary (or lower) and secondary (or higher) 160 MHz subchannels, denoted by N_(p,160) and N_(s,160) respectively. If N_(p,160)>N_(s,160), the second STA may set the RXVECTOR parameter PS160 to 0 which may indicate the primary 160 MHz or lower frequency 160 MHz subchannel. If N_(p,160)<N_(s,160), the second STA may set the RXVECTOR parameter PS160 to 1 which may indicate the secondary 160 MHz or higher frequency 160 MHz subchannel. If N_(p,160)=N_(s,160), the second STA may set the RXVECTOR parameter PS160 to 0 which may indicate the primary 160 MHz or lower frequency160 MHz subchannel. Alternatively or additionally, the second STA may set the RXVECTOR parameter PS160 to 1 which may indicate the secondary 160 MHz or higher frequency 160 MHz subchannel.

In an alternative or additional embodiment, the RXVECTOR parameter PS160 may not be defined. Instead, a TXVECTOR parameter PS160 may be defined. The second STA may set the TXVECTOR parameter PS160 directly based on allocated RU/MRU and Np,160 and Ns,160 values following the rules described above.

In an alternative or additional embodiment, the PS160 subfield may not be present in the Triggered Response Scheduling (TRS) Control field. Instead, an RXVECTOR parameter PS160 (or an internal parameter PS160) may be defined. Alternatively or additionally, RXVECTOR parameter N_P160 and N_S160 may be defined. A first STA may transmit a TRS Control field to a second STA in an EHT MU PPDU.

In the EHT MU PPDU, if the size of the RU/MRU which carries the TRS Control subfield is smaller than or equal to 2x996 tone, then the RXVECTOR parameter PS160 may be set to 0 if the RU/MRU is allocated to the primary 160 MHz channel. The RXVECTOR parameter PS160 may be set to 1 if the RU/MRU is allocated to the secondary 160 MHz channel. The RXVECTOR parameter N_P160 and N_S160 may be set to the number of tones of the RU/MRU that carries the TRS Control subfield in primary 160 MHz channel and secondary 160 MHz channel respectively.

In the EHT MU PPDU, if the size of the RU/MRU which carries the TRS Control subfield is greater than 2x996 tone, the RXVECTOR parameter N_P160 (or an internal parameter N_P160) and N_S160 (or an internal parameter N_S160) may be set to the number of tones of the RU/MRU that carries the TRS Control subfield in lower 160 MHz channel and higher 160 MHz channel respectively. The RXVECTOR parameter PS160 may be set to 0 if N_P160 is greater than or equal to N_S160. The RXVECTOR parameter PS160 may be set to 1 if N_P160 is smaller than N_S160.

Alternatively or additionally, Table 15 may be used to determine the RXVECTOR parameter PS160 (or an internal parameter PS160). In the case that RU allocation subfield may not be carried in the PPDU which carries the TRS Control subfield, the receiver (e.g., the second STA) may determine the location of the RU/MRU by the BW field and Punctured Channel Information field carried in the U-SIG field of the PPDU. In the case that the PPDU may be a legacy PPDU (e.g., any amendment before 802.11be), PS160 may be set to 0. If more RUs or MRUs are defined or allowed in the future, the table may be extended and the PS160 value may be uniquely determined by the location of the RU/MRU.

**Table 15: Exemplary table to get PS160 when the bandwidth of the PPDU that carries the TRS Control subfield is 320MHz**

| Input | | | Output |
|---|---|---|---|
| Based on the PPDU BW and the location of RU/MRU which carries the TRS Control subfield | | | |
| BW | RU/MRU size | RU/MRU Index | PS160 |
| 320 | 30996 | MRU1 | 0 |
| | | MRU2 | 0 |
| | | MRU3 | 1 |
| | | MRU4 | 1 |
| 320 | 2x996+484 | MRU1 | 0 |
| | | MRU2 | 0 |
| | | MRU3 | 0 |
| | | MRU4 | 0 |
| | | MRU5 | 0 |
| | | MRU6 | 0 |
| | | MRU7 | 1 |
| | | MRU8 | 1 |
| | | MRU9 | 1 |
| | | MRU10 | 1 |
| | | MRU11 | 1 |
| | | MRU12 | 1 |
| 320 | 3x996+484 | MRU1 | 0 |
| | | MRU2 | 0 |
| | | MRU3 | 0 |
| | | MRU4 | 0 |
| | | MRU5 | 1 |
| | | MRU6 | 1 |
| | | MRU7 | 1 |
| | | MRU8 | 1 |
| 320 | 4x996 | RU1 | 0 |

The second STA may transmit an EHT TB PPDU in response to a frame having the TRS Control subfield. The second STA may set TXVECTOR parameter RU_ALLOCATION to the value of the RU Allocation subfield of the TRS Control subfield. The second STA may set TXVECTOR parameter PS160 to the value of RXVECTOR parameter PS160. The second STA may determine the allocated RU by using the TXVECTOR parameter RU_ALLOCATION parameter and the RXVECTOR parameter PS160 together.

Alternatively or additionally, the second STA may set the first part of TXVECTOR parameter RU_ALLOCATION (e.g., the first 8 bit) to the value of the RU Allocation subfield of the TRS Control subfield. The second STA may set the second part of TXVECTOR parameter RU_ALLOCATION (e.g., the 9th bit) to the value of RXVECTOR parameter PS160 (or intemal parameter PS160). It is noted that the bit indices are described herein as an example. It may include any value, bit, or number representing the index or indices. Alternatively or additionally, the second STA may set the TXVECTOR parameter RU_ALLOCATION based on the RU Allocation subfield of the TRS Control subfield and RXVECTOR parameter PS160 (or internal parameter PS160).

The embodiments described above may be used for an EHT TB PPDU response to a frame carrying TRS Control field. In one embodiment, the TXVECTOR parameter PS160 may be used in a procedure for a EHT TB PPDU response to a Trigger frame. For example, a second STA may receive a Trigger frame from a first STA. The second STA may set the TXVECTOR parameter PS160 to the value of the PS160 subfield in Trigger frame. In another embodiment, the second STA may set the first part of TXVECTOR parameter RU_ALLOCATION (e.g., the first 8 bit) to the value of the RU Allocation subfield of the Trigger frame. The second STA may set the second part of TXVECTOR parameter RU_ALLOCATION (e.g., the 9th bit) to the value of the PS160 subfield of the Trigger frame.

In one embodiment, the first STA may be an AP and the second STA may be a non-AP STA. In another embodiment, the first STA may be a non-AP STA and the second STA may be an AP. In another embodiment, the first STA may be a non-AP STA and the second STA may be another non-AP STA.

Although the embodiments described herein consider 802.11 specific protocols, it is understood that the embodiments described herein are not restricted to this scenario and are applicable to other wireless systems as well.

Although SIFS is used to indicate various inter frame spacing in the examples of the designs and procedures, all other inter frame spacing such as RIFS, AIFS, DIFS or other agreed time interval could be applied in the same solutions.

Although four RBs per triggered TXOP are shown in some figures as example, the actual number of RBs/channels/bandwidth utilized may vary.

Although specific bits are used to signal in-BSS/OBSS as example, other bit may be used to signal this information.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method performed by a station, STA, the method comprising:
receiving, from another STA, a first physical layer protocol data unit, PPDU, including a first aggregated-control, A-control, field that comprises a High Efficiency, HE, / Extremely High Throughput, EHT, HE/EHT, subfield and a first primary secondary, PS160, subfield, wherein the HT/EHT subfield indicates whether a second PPDU that will be transmitted by the STA is based on HE-related parameters or EHT-related parameters, and the first PS160 subfield indicates a primary 160 MHz channel or a secondary 160 MHz channel; and
transmitting, to the another STA, based on the HE/EHT subfield, the second PPDU including a second A-control field that comprises a second PS160 subfield, an EHT-modulation and coding scheme, MCS, subfield, and a number of spatial streams, NSS, subfield, wherein the second PS160 subfield indicates a 160 MHz channel determined from among the primary 160 MHz channel and the secondary 160 MHz channel based on the indication of the first PS160 subfield, wherein an index in the EHT-MCS subfield and a value in the NSS subfield are determined by the STA based on measurement of the determined 160 MHz channel.

2. The method of claim 1, wherein the second A-control field further comprises an unsolicited MCS feedback, MFB, subfield, a resource unit, RU, allocation subfield, a bandwidth, BW, subfield, and a MCS request sequence index, MSI, /Partial PPDU parameters subfield.

3. The method of claim 2, further comprising:
determining, based on one or more RUs indicated in the RU allocation subfield and a BW indicated in the BW subfield, a size and location of the one or more RUs in the 160 MHz channel to measure a channel quality; and
determining, based on the channel quality, the index of the EHT-MCS subfield and the value of the NSS subfield for the transmission of the second PPDU to the another STA.

4. The method of claim 2, wherein, on a condition that the unsolicited MFB is zero (0) or false, the MSI/Partial PPDU parameters subfield includes a sequence number indicating a PPDU that the STA received for a EHT MCS feedback request or the STA transmitted for a EHT MCS feedback response.

5. The method of claim 2, wherein, on a condition that the unsolicited MFB is one (1) or true, the MSI/Partial PPDU parameters subfield includes a value indicating an EHT PPDU format and Coding Type that the STA measured for a channel quality.

6. The method of claim 1, wherein the HE/EHT subfield received in the first A-control field indicates to the STA that the EHT-related parameters are indicated in the second A-control field of the second PPDU.

7. A station, STA, comprising:
a receiver configured to receive, from another STA, a first physical layer protocol data unit, PPDU, including a first aggregated-control, A-control, field that comprises a High Efficiency, HE, / Extremely High Throughput, EHT, HE/EHT, subfield and a first primary secondary, PS160, subfield, wherein the HT/EHT subfield indicates whether a second PPDU that will be transmitted by the STA is based on HE-related parameters or EHT-related parameters, and the first PS160 subfield indicates a primary 160 MHz channel or a secondary 160 MHz channel; and
a transmitter configured to transmit, to the another STA, based on the HE/EHT subfield, the second PPDU including a second A-control field that comprises a second PS160 subfield, an EHT-modulation and coding scheme, MCS, subfield, and a number of spatial streams, NSS, subfield, wherein the second PS160 subfield indicates a 160 MHz channel determined from among the primary 160 MHz channel and the secondary 160 MHz channel based on the indication of the first PS160 subfield, wherein an index in the EHT-MCS subfield and a value in the NSS subfield are determined by the STA based on measurement of the selected 160 MHz channel

8. The STA of claim 7, wherein the second A-control field further comprises an unsolicited MCS feedback, MFB, subfield, a resource unit, RU, allocation subfield, a bandwidth, BW, subfield, and a MCS request sequence index, MSI, /Partial PPDU parameters subfield.

9. The STA of claim 8, further comprising:
a processor configured to:
determine, based on one or more RUs indicated in the RU allocation subfield and a BW indicated in the BW subfield, a size and location of the one or more RUs in the 160 MHz channel to measure a channel quality; and
determine, based on the channel quality, the index of the EHT-MCS subfield and the value of the NSS subfield for the transmission of the second PPDU to the another STA.

10. The STA of claim 9, wherein the one or more RUs in the RU allocation subfield are an RU or multiple RUs, MRU, the index is a EHT MCS index, and the value represents a number of spatial streams.

11. The STA of claim 8, wherein, on a condition that the unsolicited MFB is zero (0) or false, the MSI/Partial PPDU parameters subfield includes a sequence number indicating a PPDU that the STA received for a EHT MCS feedback request or the STA transmitted for a EHT MCS feedback response.

12. The STA of claim 8, wherein, on a condition that the unsolicited MFB is one (1) or true, the MSI/Partial PPDU parameters subfield includes a value indicating an EHT PPDU format and Coding Type that the STA measured for a channel quality.

13. The STA of claim 12, wherein the EHT PPDU format includes an EHT multi-user, MU, PPDU and an EHT trigger-based TB, PPDU, and the Coding Type includes Binary Convolutional Codes, BCC, and Low-Density Parity-Check, LDPC.

14. The STA of claim 7, wherein the HE/EHT subfield received in the first A-control field indicates to the STA that the EHT-related parameters are indicated in the second A-control field of the second PPDU.

15. The STA of claim 7, wherein the EHT-related parameters includes the index, the value, a primary/secondary 160 MHz channel indication, and an EHT PPDU format.

## Patentansprüche

1. Verfahren, das durch eine Station (STA) durchgeführt wird, wobei das Verfahren umfasst:
Empfangen, von einer anderen STA, einer ersten Bitübertragungsschicht-Protokolldateneinheit (Physical Layer Protocol Data Unit, PPDU), die ein erstes Aggregated-Control (A-Control)-Feld enthält, das ein High Efficiency (HE) / Extremely High Throughput (EHT) (HE/EHT)-Teilfeld und ein erstes Primär/Sekundär (PS160)-Teilfeld enthält, wobei das HT/EHT-Teilfeld angibt, ob eine zweite PPDU, die durch die STA gesendet wird, auf HE-bezogenen Parametern oder EHT-bezogenen Parametern basiert, und das erste PS160-Teilfeld einen primären 160-MHz-Kanal oder einen sekundären 160-MHz-Kanal angibt; und
Senden, an die andere STA, auf der Grundlage des HE/EHT-Teilfeldes, der zweiten PPDU, die ein zweites A-Control-Feld enthält, das ein zweites PS160-Teilfeld, ein EHT-Modulations- und Codierungsregime (MCS)-Teilfeld und ein Number-of-Spatial-Streams (NSS)-Teilfeld umfasst, wobei das zweite PS160-Teilfeld einen 160-MHz-Kanal angibt, der aus dem primären 160-MHz-Kanal und dem sekundären 160-MHz-Kanal auf der Grundlage der Angabe des ersten PS160-Teilfeldes bestimmt wird, wobei ein Index in dem EHT-MCS-Teilfeld und ein Wert in dem NSS-Teilfeld durch die STA auf der Grundlage der Messung des bestimmten 160-MHz-Kanals bestimmt werden.

2. Verfahren nach Anspruch 1, wobei das zweite A-Control-Feld des Weiteren ein unaufgefordertes-MCS-Feedback (MFB)-Teilfeld, ein Ressourceneinheiten (Resource Units, RUs)-Zuteilungs-Teilfeld, ein Bandbreiten (Band Width, BW)-Teilfeld und ein MCS-Request-Sequence-Index (MSI/Partial)-PPDU-Parameter-Teilfeld enthält.

3. Verfahren nach Anspruch 2, des Weiteren umfassend:
Bestimmen, auf der Grundlage einer oder mehrerer in dem RU-Zuteilungs-Teilfeld angegebener RUs und einer in dem BW-Teilfeld angegebenen BW, einer Größe und eines Ortes der einen oder der mehreren RUs in dem 160-MHz-Kanal, um eine Kanalqualität zu messen; und
Bestimmen, auf der Grundlage der Kanalqualität, des Index des EHT-MCS-Teilfeldes und des Wertes des NSS-Teilfeldes für das Senden der zweiten PPDU an die andere STA.

4. Verfahren nach Anspruch 2, wobei unter der Bedingung, dass das unaufgeforderte MFB null (0) oder falsch ist, das MSI/Partial-PPDU-Parameter-Teilfeld eine laufende Nummer enthält, die eine PPDU angibt, die die STA für eine EHT-MCS-Feedback-Anforderung empfangen hat oder die die STA für eine EHT-MCS-Feedback-Antwort gesendet hat.

5. Verfahren nach Anspruch 2, wobei unter der Bedingung, dass das unaufgeforderte MFB eins (1) oder wahr ist, das MSI/Partial-PPDU-Parameter-Teilfeld einen Wert enthält, der ein EHT-PPDU-Format und einen Codierungstyp angibt, die die STA für eine Kanalqualität gemessen hat.

6. Verfahren nach Anspruch 1, wobei das HE/EHT-Teilfeld, das in dem ersten A-Control-Feld empfangen wurde, der STA angibt, dass die EHT-bezogenen Parameter in dem zweiten A-Control-Feld der zweiten PPDU angegeben sind.

7. Station (STA), umfassend:
einen Empfänger, der eingerichtet ist zum: Empfangen, von einer anderen STA, einer ersten Bitübertragungsschicht-Protokolldateneinheit (Physical Layer Protocol Data Unit, PPDU), die ein erstes Aggregated-Control (A-Control)-Feld enthält, das ein High Efficiency (HE) / Extremely High Throughput (EHT) (HE/EHT)-Teilfeld und ein erstes Primär/Sekundär (PS160)-Teilfeld enthält, wobei das HT/EHT-Teilfeld angibt, ob eine zweite PPDU, die durch die STA gesendet wird, auf HE-bezogenen Parametern oder EHT-bezogenen Parametern basiert, und das erste PS160-Teilfeld einen primären 160-MHz-Kanal oder einen sekundären 160-MHz-Kanal angibt; und
einen Sender, der eingerichtet ist zum: Senden, an die andere STA, auf der Grundlage des HE/EHT-Teilfeldes, der zweiten PPDU, die ein zweites A-Control-Feld enthält, das ein zweites PS160-Teilfeld, ein EHT-Modulations- und Codierungsregime (MCS)-Teilfeld und ein Number-of-Spatial-Streams (NSS)-Teilfeld umfasst, wobei das zweite PS160-Teilfeld einen 160-MHz-Kanal angibt, der aus dem primären 160-MHz-Kanal und dem sekundären 160-MHz-Kanal auf der Grundlage der Angabe des ersten PS160-Teilfeldes bestimmt wird, wobei ein Index in dem EHT-MCS-Teilfeld und ein Wert in dem NSS-Teilfeld durch die STA auf der Grundlage der Messung des bestimmten 160-MHz-Kanals bestimmt werden.

8. STA nach Anspruch 7, wobei das zweite A-Control-Feld des Weiteren ein unaufgefordertes-MCS-Feedback (MFB)-Teilfeld, ein Ressourceneinheiten (Resource Units, RUs)-Zuteilungs-Teilfeld, ein Bandbreiten (Band Width, BW)-Teilfeld und ein MCS-Request-Sequence-Index (MSI/Partial)-PPDU-Parameter-Teilfeld enthält.

9. STA nach Anspruch 8, des Weiteren umfassend:
einen Prozessor, der eingerichtet ist zum:
Bestimmen, auf der Grundlage einer oder mehrerer in dem RU-Zuteilungs-Teilfeld angegebener RUs und einer in dem BW-Teilfeld angegebenen BW, einer Größe und eines Ortes der einen oder der mehreren RUs in dem 160-MHz-Kanal, um eine Kanalqualität zu messen; und
Bestimmen, auf der Grundlage der Kanalqualität, des Index des EHT-MCS-Teilfeldes und des Wertes des NSS-Teilfeldes für das Senden der zweiten PPDU an die andere STA.

10. STA nach Anspruch 9, wobei die eine oder die mehreren RUs in dem RU-Zuteilungs-Teilfeld eine RU oder mehrere RUs (MRU) sind, der Index ein EHT-MCS-Index ist, und der Wert eine Anzahl von räumlichen Streams (Number of Spatial Streams) darstellt.

11. STA nach Anspruch 8, wobei unter der Bedingung, dass das unaufgeforderte MFB null (0) oder falsch ist, das MSI/Partial-PPDU-Parameter-Teilfeld eine laufende Nummer enthält, die eine PPDU angibt, die die STA für eine EHT-MCS-Feedback-Anforderung empfangen hat oder die die STA für eine EHT-MCS-Feedback-Antwort gesendet hat.

12. STA nach Anspruch 8, wobei unter der Bedingung, dass das unaufgeforderte MFB eins (1) oder wahr ist, das MSI/Partial-PPDU-Parameter-Teilfeld einen Wert enthält, der ein EHT-PPDU-Format und einen Codierungstyp angibt, die die STA für eine Kanalqualität gemessen hat.

13. STA nach Anspruch 12, wobei das EHT-PPDU-Format eine EHT-Mehrbenutzer (Multi User, MU)-PPDU und eine EHT-Auslöser-basierte (EHT Trigger-Based, TB) PPDU enthält und der Codierungstyp binäre Faltungscodes (Binary Convolutional Codes, BCC) und einen Low-Density-Parity-Check (LDPC) enthält.

14. STA nach Anspruch 7, wobei das HE/EHT-Teilfeld, das in dem ersten A-Control-Feld empfangen wurde, der STA angibt, dass die EHT-bezogenen Parameter in dem zweiten A-Control-Feld der zweiten PPDU angegeben sind.

15. STA nach Anspruch 7, wobei die EHT-bezogenen Parameter den Index, den Wert, eine primäre/sekundäre 160-MHz-Kanal-Angabe und ein EHT-PPDU-Format enthalten.

## Revendications

1. Procédé réalisé par une station, STA, le procédé comprenant :
la réception, depuis une autre STA, d'une première unité de données de protocole de couche physique, PPDU, incluant un premier champ de commande agrégée, A-control, qui comprend un sous-champ de rendement élevé, HE/débit extrêmement élevé, EHT, HE/EHT, et un premier sous-champ primaire secondaire, PS160, dans lequel le sous-champ HE/EHT indique si une deuxième PPDU qui sera transmise par la STA est basée sur des paramètres liés à HE ou sur des paramètres liés à EHT, et le premier sous-champ PS160 indique un canal de 160 MHz primaire ou un canal de 160 MHz secondaire ; et
la transmission, à l'autre STA, sur la base du sous-champ HE/EHT, de la deuxième PPDU incluant un deuxième champ A-control qui comprend un deuxième sous-champ PS160, un sous-champ de schéma de modulation et de codage, MCS, EHT, et un sous-champ de nombre de flux spatiaux, NSS, dans lequel le deuxième sous-champ PS160 indique un canal de 160 MHz déterminé parmi le canal de 160 MHz primaire et le canal de 160 MHz secondaire sur la base de l'indication du premier sous-champ PS160, dans lequel un indice dans le sous-champ EHT-MCS et une valeur dans le sous-champ NSS sont déterminés par la STA sur la base d'une mesure du canal de 160 MHz déterminé.

2. Procédé selon la revendication 1, dans lequel le deuxième champ A-control comprend en outre un sous-champ de rétroaction MCS, MFB, non sollicitée, un sous-champ d'allocation d'unités de ressources, RU, un sous-champ de bande passante, BW, et un sous-champ de paramètres d'indice de séquence de demande MCS, MSI/PPDU partielle.

3. Procédé selon la revendication 2, comprenant en outre :
la détermination, sur la base d'une ou plusieurs RU indiquées dans le sous-champ d'allocation de RU et d'une BW indiquée dans le sous-champ de BW, d'une taille et d'un emplacement des une ou plusieurs RU dans le canal de 160 MHz pour mesurer une qualité de canal ; et
la détermination, sur la base de la qualité de canal, de l'indice du sous-champ EHT-MCS et de la valeur du sous-champ NSS pour la transmission de la deuxième PPDU à l'autre STA.

4. Procédé selon la revendication 2, dans lequel, à condition que la MFB non sollicitée soit zéro (0) ou faux, le sous-champ de paramètres MSI/PPDU partielle inclut un numéro de séquence indiquant une PPDU que la STA a reçue pour une demande de rétroaction MCS EHT ou que la STA a transmise pour une réponse de rétroaction MCS EHT.

5. Procédé selon la revendication 2, dans lequel, à condition que la MFB non sollicitée soit un (1) ou vrai, le sous-champ de paramètres MSI/PPDU partielle inclut une valeur indiquant un format de PPDU EHT et un type de codage que la STA a mesurée pour une qualité de canal.

6. Procédé selon la revendication 1, dans lequel le sous-champ HE/EHT reçu dans le premier champ A-control indique à la STA que les paramètres liés à EHT sont indiqués dans le deuxième champ A-control de la deuxième PPDU.

7. Station, STA, comprenant :
un récepteur configuré pour recevoir, depuis une autre STA, une première unité de données de protocole de couche physique, PPDU, incluant un premier champ de commande agrégée, A-control, qui comprend un sous-champ de rendement élevé, HE/débit extrêmement élevé, EHT, HE/EHT, et un premier sous-champ primaire secondaire, PS160, dans laquelle le sous-champ HE/EHT indique si une deuxième PPDU qui sera transmise par la STA est basée sur des paramètres liés à HE ou sur des paramètres liés à EHT, et le premier sous-champ PS160 indique un canal de 160 MHz primaire ou un canal de 160 MHz secondaire ; et
un émetteur configuré pour transmettre, à l'autre STA, sur la base du sous-champ HE/EHT, la deuxième PPDU incluant un deuxième champ A-control qui comprend un deuxième sous-champ PS160, un sous-champ de schéma de modulation et de codage, MCS, EHT, et un sous-champ de nombre de flux spatiaux, NSS, dans laquelle le deuxième sous-champ PS160 indique un canal de 160 MHz déterminé parmi le canal de 160 MHz primaire et le canal de 160 MHz secondaire sur la base de l'indication du premier sous-champ PS160, dans laquelle un indice dans le sous-champ EHT-MCS et une valeur dans le sous-champ NSS sont déterminés par la STA sur la base d'une mesure du canal de 160 MHz sélectionné.

8. STA selon la revendication 7, dans laquelle le deuxième champ A-control comprend en outre un sous-champ de rétroaction MCS, MFB, non sollicitée, un sous-champ d'allocation d'unités de ressources, RU, un sous-champ de bande passante, BW, et un sous-champ de paramètres d'indice de séquence de demande MCS, MSI/PPDU partielle.

9. STA selon la revendication 8, comprenant en outre :
un processeur configuré pour :
déterminer, sur la base d'une ou plusieurs RU indiquées dans le sous-champ d'allocation de RU et d'une BW indiquée dans le sous-champ de BW, une taille et un emplacement des une ou plusieurs RU dans le canal de 160 MHz pour mesurer une qualité de canal ; et
déterminer, sur la base de la qualité de canal, l'indice du sous-champ EHT-MCS et la valeur du sous-champ NSS pour la transmission de la deuxième PPDU à l'autre STA.

10. STA selon la revendication 9, dans laquelle les une ou plusieurs RU dans le sous-champ d'allocation de RU sont une RU ou de multiples RU, MRU, l'indice est un indice MCS EHT, et la valeur représente un nombre de flux spatiaux.

11. STA selon la revendication 8, dans laquelle, à condition que la MFB non sollicitée soit zéro (0) ou faux, le sous-champ de paramètres MSI/PPDU partielle inclut un numéro de séquence indiquant une PPDU que la STA a reçue pour une demande de rétroaction MCS EHT ou que la STA a transmise pour une réponse de rétroaction MCS EHT.

12. STA selon la revendication 8, dans laquelle, à condition que la MFB non sollicitée soit un (1) ou vrai, le sous-champ de paramètres MSI/PPDU partielle inclut une valeur indiquant un format de PPDU EHT et un type de codage que la STA a mesurée pour une qualité de canal.

13. STA selon la revendication 12, dans laquelle le format PPDU EHT inclut une PPDU multiutilisateurs, MU, EHT et une PPDU basée sur déclenchement, TB, EHT, et le type de codage inclut des codes convolutifs binaires, BCC, et un contrôle de parité à faible densité, LDPC.

14. STA selon la revendication 7, dans laquelle le sous-champ HE/EHT reçu dans le premier champ A-control indique à la STA que les paramètres liés à EHT sont indiqués dans le deuxième champ A-control de la deuxième PPDU.

15. STA selon la revendication 7, dans laquelle les paramètres liés à EHT incluent l'indice, la valeur, une indication de canal de 160 MHz primaire/secondaire, et un format de PPDU EHT.
